(19) **Europäisches Patentamt / European Patent Office / Office européen des brevets**

(11) **EP 3 647 485 B1**

(12) **EUROPEAN PATENT SPECIFICATION**

(45) Date of publication and mention
of the grant of the patent:
**28.01.2026 Bulletin 2026/05**

(21) Application number: **18824321.6**

(22) Date of filing: **11.06.2018**

(51) International Patent Classification (IPC):
*D06P 5/30* (2006.01)       *D06P 5/00* (2006.01)
*D06M 13/342* (2006.01)    *D06M 101/06* (2006.01)
*D06P 1/44* (2006.01)        *D06P 1/52* (2006.01)
*D06P 1/647* (2006.01)      *C09D 11/322* (2014.01)
*D06P 1/66* (2006.01)        *D06P 5/22* (2006.01)
*D06P 1/673* (2006.01)

(52) Cooperative Patent Classification (CPC):
**D06P 1/44; C09D 11/10; C09D 11/322; C09D 11/40;
C09D 11/54; D06P 1/5242; D06P 1/5285;
D06P 1/647; D06P 1/66; D06P 1/67333;
D06P 1/6735; D06P 5/22; D06P 5/225; D06P 5/30**

(86) International application number:
**PCT/JP2018/022188**

(87) International publication number:
**WO 2019/003881 (03.01.2019 Gazette 2019/01)**

(54) **PROCESSING FLUID COMPOSITION, INKJET PRINTING METHOD, AND FABRIC**

VERARBEITUNGSFLÜSSIGKEITSZUSAMMENSETZUNG, TINTENSTRAHLDRUCKVERFAHREN UND GEWEBE

COMPOSITION DE LIQUIDE DE TRAITEMENT, PROCÉDÉ D'IMPRESSION, ET TISSU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.06.2017 JP 2017128486**

(43) Date of publication of application:
**06.05.2020 Bulletin 2020/19**

(73) Proprietor: **Seiko Epson Corporation
Tokyo 160-8801 (JP)**

(72) Inventors:
• **OKADA, Hideki**
  **Suwa-shi**
  **Nagano 392-8502 (JP)**
• **FUJIE, Toshihiro**
  **Suwa-shi**
  **Nagano 392-8502 (JP)**
• **OHASHI, Masakazu**
  **Suwa-shi**
  **Nagano 392-8502 (JP)**

(74) Representative: **Lewis Silkin LLP
Arbor
255 Blackfriars Road
London SE1 9AX (GB)**

(56) References cited:
WO-A1-2009/084600       WO-A1-2009/084600
JP-A- 2016 138 157         JP-A- H07 119 047
JP-A- H11 181 684          US-A1- 2011 102 497
US-A1- 2012 167 315       US-A1- 2017 158 899

EP 3 647 485 B1

**Description**

Technical Field

The present invention relates to a treatment solution composition, an ink jet textile printing method, and fabric.

Background Art

Hitherto, the following technique has been known: a technique in which, in a case where a base material such as fabric is dyed with a colorant, the base material is pretreated using a treatment solution containing a cationic compound for the purpose of improving chromogenic properties of the colorant or the occurrence of bleeding. For example, Patent Literature 1 proposes, as such a treatment solution, an inkjet textile printing pretreatment agent containing polyvalent metal ions and specific polymer micro-particles. Further examples of treatment solutions and reaction liquids are described in Patent Literature 2 to 6.

Citation List Patent Literature

PTL 1: JP-A-2011-168911
PTL 2: US 2017/158899
PTL 3: US 2012/167315
PTL 4: US 2011/102497
PTL 5: WO 2009/084600
PTL 6: JP 2016 138157

Summary of Invention

Technical Problem

However, it has been found that the ink jet textile printing pretreatment agent described in Patent Literature 1 can enhance chromogenic properties and, however, has a problem that it is difficult to reduce the occurrence of pretreatment marks. In particular, pretreating fabric with a pretreatment agent containing polyvalent metal ions has caused visually recognizable changes in appearance, that is, pretreatment marks in regions provided with the pretreatment agent. It has been found that such pretreatment marks tend to be significant in fabric (textile) dark-colored with dye or the like in advance and are likely to appear to be the change in hue of the color of a textile. In a case where fabric is pretreated, a pretreatment agent is often applied to regions other than those that are dyed (printed) with a colorant. Therefore, when a region not printed is provided with pretreatment marks, a change in hue or the like is likely to be more conspicuous in comparison to an unpretreated region (a region provided with no pretreatment marks). Thus, the occurrence of pretreatment marks may possibly reduce the appearance quality of a product prepared by textile printing.

Solution to Problem

The present invention has been made to solve at least one portion of the above problem, has been made for the purpose of enhancing chromogenic properties and the purpose of reducing the occurrence of treatment marks, and can be embodied in forms below or as application examples below.
[Application Example] A treatment solution composition according to this application example is a treatment solution composition applied to fabric and used in textile printing and contains a cationic compound, betaine, and water as defined in claim 1.
According to this application example, in fabric provided with the treatment solution composition in pretreatment, the occurrence of pretreatment marks can be reduced.
The treatment solution composition specified in the application example is preferably used for ink jet pigment textile printing.
This allows ink jet pigment textile printing using pigment as a colorant and therefore enables chromogenic properties of the colorant to be enhanced. Steps such as a dyeing step and a washing step to be simplified as compared to dye. Furthermore, textile printing can be performed for various types of fibers as compared to dye that the type of applicable fibers (fabrics) is relatively limited.
In the treatment solution composition specified in the application example, the ratio of the content of the betaine to the content of the cationic compound is 0.2 or more on a mass basis.

This enables the occurrence of pretreatment marks to be further reduced.

In the treatment solution composition specified in the application example, the fabric is preferably a cotton fabric colored with dye.

This allows chromogenic properties of cotton fabrics, such as wears and other accessories, colored with dye in advance to be ensured and enables the occurrence of pretreatment marks to be reduced.

In the treatment solution composition specified in the application example, the betaine is one or more selected from carnitine, trimethylglycine, and $\gamma$-butyrobetaine.

This enables the occurrence of pretreatment marks to be further reduced.

In the treatment solution composition specified in the application example, the ratio of the content of the betaine to the content of the cationic compound is preferably 0.6 or more on a mass basis.

This enables the occurrence of pretreatment marks to be further reduced and is particularly suitable for fabric colored to red.

In the treatment solution composition specified in the application example, the ratio of the content of the betaine to the content of the cationic compound is preferably 2.0 or less on a mass basis.

This suppresses the increase in wettability of fabric. Therefore, printing the fabric with a colorant suppresses the occurrence of strike-through of the colorant and enables chromogenic properties of the colorant to be further enhanced.

In the treatment solution composition specified in the application example, the cationic compound is a polyvalent metal salt.

This facilitates the aggregation of a colorant and the like to enable chromogenic properties of the colorant to be further enhanced. This can be successfully used for cotton fabrics.

In the treatment solution composition specified in the application example, the cationic compound is preferably a calcium salt.

This enables the occurrence of pretreatment marks to be further reduced. This can be more successfully used for cotton fabrics in addition to the enhancement of chromogenic properties of a colorant.

In the treatment solution composition specified in the application example, the fabric preferably contains a triazine compound.

The occurrence of pretreatment marks can be reduced in fabrics (textiles) dyed with the triazine compound.

It is preferable that the treatment solution composition specified in the application example further contains a surfactant and the HLB value of the surfactant is 13 or more.

This enables permeation and wet spreading in fabric to be adjusted when the treatment solution composition is applied to the fabric.

In the treatment solution composition specified in the application example, the content of the surfactant is preferably 0.3% by mass or less with respect to the total mass of the treatment solution.

This suppresses the excessive reduction in surface tension of the treatment solution composition and allows the treatment solution composition to be likely to be held near a surface of fabric when the treatment solution composition is applied to the fabric. This enables functions of the treatment solution to be readily exhibited.

[Application Example] An ink jet textile printing method according to this application example includes a step of applying the treatment solution composition specified in the above application example to fabric.

According to this application example, the ink jet textile printing method can be provided such that chromogenic properties are ensured and the occurrence of pretreatment marks is reduced more than ever.

The ink jet textile printing method specified in this application example preferably includes a step of applying a pigment textile printing ink to a region of the fabric that is provided with the treatment solution composition by an ink jet method.

This eliminates a printing plate necessary for analogue textile printing to facilitate dealing with high-mix, low-volume production and enables a high-definition image or the like to be formed. Using the pigment textile printing ink further enhances chromogenic properties of a colorant and enables steps such as a dyeing step and a washing step to be simplified as compared to dye inks. In addition, textile printing can be performed for various types of fibers as compared to dye inks that the type of applicable fibers (fabrics) is relatively limited.

[Application Example] Fabric according to this application example is obtained by applying the treatment solution composition specified in the above application example.

According to this application example, the fabric can be provided such that chromogenic properties are ensured and the occurrence of pretreatment marks is reduced more than ever when the fabric is used for textile printing. That is, the appearance quality of a product prepared by textile printing can be enhanced.

Brief Description of Drawing

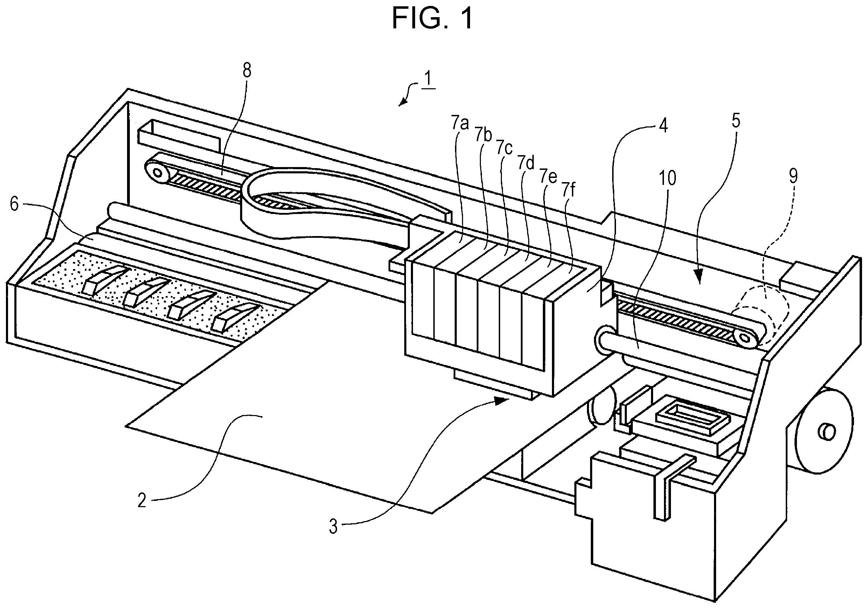

[FIG. 1] FIG. 1 is a schematic perspective view of an ink jet textile printing apparatus according to an embodiment.

Description of Embodiments

Embodiments of the present invention are described below. A treatment solution composition, ink jet textile printing method, and fabric modified in such a way are included in the technical scope of the invention.

(Treatment Solution Composition)

A treatment solution composition (hereinafter simply referred to as the "treatment solution") according to this embodiment is used in such a manner that the treatment solution is applied to fabric serving as a base material of a textile print in advance in a case where the textile print is manufactured by applying (printing) an ink composition. An application method used to print the ink composition is preferably an ink jet method. The ink jet method is a method in which fine droplets of the ink composition are discharged from an ink jet head of an ink jet printer or the like. Textile printing using the method is referred to as ink jet textile printing. Components contained in the treatment solution according to this embodiment are described below. In this embodiment, the ink composition exemplifies an aqueous pigment ink composition used for pigment textile printing (textile printing using an ink composition containing pigment as a colorant).

The treatment solution according to this embodiment is a treatment solution applied to fabric and used in textile printing and contains a cationic compound, betaine, and water.

[Cationic Compound]

The cationic compound has the function of aggregating components in the ink composition. That is, in a case where fabric provided with the treatment solution is printed with the ink composition in the manufacture of a textile print, the cationic compound, which is contained in the treatment solution, acts on pigment, resin micro-particles (emulsion), and the like to facilitate the aggregation of particles, thereby suppressing the absorption of the particles in spaces between fibers forming the fabric or in the fibers. Therefore, the color development of pigment in the textile print can be enhanced. In addition, the cationic compound has the function of increasing the viscosity of the ink composition. Therefore, the excessive permeation of the ink composition into the fabric is suppressed and the occurrence of spread or bleeding can be reduced.

The above-mentioned functions of the cationic compound are derived from the neutralization of the surface charge of a component contained in the ink composition or the effect of varying the pH of the ink composition. These effects enable pigment in the ink composition to be aggregated or precipitated or the ink composition to be thickened.

Examples of cationic compound include polyvalent metal salts and cationic resins. In the present invention, a polyvalent metal salt is used from the viewpoint that the polyvalent metal salt is suitable for the enhancement of chromogenic properties of pigment and cotton fabrics. These cationic compounds may be used alone or in combination.

The polyvalent metal salt is a water-soluble compound containing a divalent or higher polyvalent metal cation and an anion forming a salt together with the polyvalent metal cation. Examples of the divalent or higher polyvalent metal cation include divalent metal cations such as $Ca^{2+}$, $Cu^{2+}$, $Ni^{2+}$, $Mg^{2+}$, $Zn^{2+}$, and $Ba^{2+}$ and trivalent metal cations such as $Al^{3+}$, $Fe^{3+}$, and $Cr^{3+}$. Examples of the anion include $Cl^-$, $I^-$, $Br^-$, $SO_4^{2-}$, $CO_3^{2-}$, $ClO_3^-$, $NO_3^-$, $HCOO^-$, and $CH_3COO^-$. Among polyvalent metal salts obtained by combining such polyvalent metal cations with anions, a calcium salt such as calcium chloride or calcium nitrate is preferably used from the viewpoint that the storage stability of the treatment solution is enhanced and chromogenic properties are enhanced by exhibiting the effect of aggregating pigment or resin micro-particles (emulsion). The polyvalent metal salts may be used alone or in combination.

A metal salt other than the polyvalent metal salts may be used in addition to the polyvalent metal salts. Examples of the metal salt include sodium sulfate and potassium sulfate, which are obtained by combining a monovalent metal cation such as $Na^-$ or $K^-$ with the above anion.

Examples of the cationic resins include cationic urethanic resins, olefinic resins, and allylamine resins.

The cationic urethanic resins used may be those well-known and commercially available products. Each cationic urethanic resin may be used in the form of a solution obtained by dissolving the cationic urethanic resin in a solvent such as water or an organic solvent or in the form of emulsion obtained by dispersing the cationic urethanic resin in the solvent. Examples of the cationic urethanic resins include Hydran® CP-7010, 7120, 7030, 7040, 7050, 7060, 7610 (the above being trade names, DIC Corporation), SUPERFLEX® 600, 610, 620, 630, 640, 650 (the above being trade names, Dai-ichi Kogyo Seiyaku Co., Ltd.), Urethane Emulsion WBR-2120C, and 2122C (the above being trade names, Taisei Fine Chemical Co., Ltd.).

The olefinic urethanic resins are polymeric compounds having a structure, such as an ethylene chain or a propylene chain, derived from an olefinic monomer as a basic skeleton. The olefinic urethanic resins used may be those well-known and commercially available products. Each olefinic urethanic resin may be used in the form of a solution obtained by dissolving the olefinic urethanic resin in a solvent such as water or an organic solvent or in the form of emulsion obtained by dispersing the olefinic urethanic resin in the solvent. Examples of the cationic olefinic resins include ARROWBASE® CB-1200 and CD-1200 (the above being trade names, Unitika Ltd.).

The olefinic allylamine resins used may be those well-known. Examples of the olefinic allylamine resins include polyallylamine hydrochloride, polyallylamine amidosulfate, an allylamine hydrochloride-diallylamine hydrochloride copolymer, an allylamine acetate-diallylamine acetate copolymer, an allylamine hydrochloride-dimethylallylamine hydrochloride copolymer, an allylamine-dimethylallylamine copolymer, polydiallylamine hydrochloride, polymethyldiallylamine hydrochloride, polymethyldiallylamine amidosulfate, polymethyldiallylamine acetate, polyallyldimethylammonium chloride, an diallylamine acetate-sulfur dioxide copolymer, a diallyl methylethylammonium ethyl sulfate-sulfur dioxide copolymer, a methyliallylamine hydrochloride-sulfur dioxide copolymer, a diallyl dimethylammonium chloride sulfur dioxide copolymer, and a diallyl dimethylammonium chloride acrylamide copolymer.

The olefinic allylamine resins used may be commercially available products. Examples of the olefinic allylamine resins include PAA-HCL-01, 03, 05, 3L, 10L, PAA-H-HCL, PAA-SA, PAA-01, 03, 05, 08, 15, 15C, 25, PAA-H-10C, PAA-D11-HCL, PAA-D41-HCL, PAA-D19-HCL, PAS-21CL, 22SA, 92, 92A, PAS-M-1, 1L, 1A, PAS-H-1L, 5L, 10L, PAS-J-81, 81L (the above being trade names, Nittobo Medical Co., Ltd.), Himoloc® NEO-600, Q-101, Q-311, Q-501, and Himax SC-505 (the above being trade names, Hymo Corporation).

A cationic surfactant, an inorganic acid, an organic acid, or the like may be used as another cationic compound other than the above-mentioned cationic resins.

Examples of the cationic surfactant include primary amine salt compounds, secondary amine salt compounds, tertiary amine salt compounds, alkylamine salts, dialkylamine salts, aliphatic amine salts, benzalkonium salts, quaternary ammonium salts, quaternary alkylammonium salts, alkylpyridinium salts, sulfonium salts, phosphonium salts, onium salts, and imidazolinium salts. Particular examples of the cationic surfactant include chlorides or acetates of laurylamine, coconut amine, and rosin amine, dodecyltrimethylammonium chloride (lauryltrimethylammonium chloride), hexadecyltrimethylammonium chloride (cetyltrimethylammonium chloride), benzyltributylammonium chloride, benzalkonium chloride, dimethylethyllaurylammonium ethylsulfate, dimethylethyloctylammonium ethylsulfate, trimethyllaurylammonium chloride, cetylpyridinium chloride, cetylpyridinium bromide, dihydroxyethyl laurylamine, decyldimethylbenzylammonium chloride, dodecyldimethylbenzylammonium chloride, tetradecyldimethylammonium chloride, hexadecyldimethylammonium chloride, and octadecyldimethylammonium chloride. These cationic surfactants used may be commercially available products.

Examples of the inorganic acid or the organic acid include inorganic acids such as sulfuric acid, hydrochloric acid, nitric acid, and phosphoric acid; organic acids such as polyacrylic acid, acetic acid, glycolic acid, malonic acid, malic acid, maleic acid, ascorbic acid, succinic acid, glutaric acid, fumaric acid, citric acid, tartaric acid, lactic acid, sulfonic acid, orthophosphoric acid, pyrrolidonecarboxylic acid, pyronecarboxylic acid, pyrrolecarboxylic acid, furancarboxylic acid, pyridinecarboxylic acid, coumaric acid, thiophenecarboxylic acid, and nicotinic acid; derivatives of these compounds; or salts of these. These may be used alone or in combination.

The other cationic compound used may be, for example, an inorganic pigment such as chalk, kaolin, calcined clay, talc, titanium oxide, zinc oxide, zinc sulfide, synthetic silica, aluminium hydroxide, alumina, sericite, white carbon, saponite, calcium montmorillonite, sodium montmorillonite, or bentonite or an organic pigment such as an acrylic plastic pigment or a urea polymeric compound.

The content of the cationic compound in the treatment solution is not particularly limited. The content thereof is preferably 0.1% by mass to 40% by mass with respect to the total mass of the treatment solution, more preferably 2% by mass to 25% by mass, further more preferably 5% by mass to 20% by mass, and particularly preferably 10% by mass to 20% by mass. Setting the content the cationic compound to the above range reduces the precipitation or separation of the cationic compound in the treatment solution, facilitates the aggregation of pigment or resin micro-particles (emulsion) in ink, and suppresses the absorption of the pigment or the resin micro-particles in spaces between fibers forming the fabric or in the fibers, thereby enabling a phenomenon (strike-through) in which a colorant strikes in the back surface direction of a textile print surface to be reduced and chromogenic properties of a textile print to be enhanced.

[Betaine]

The term "betaine" refers to a compound which has a positive charge and a negative charge in the same molecule and in which the molecule has no charge as a whole. In particular, the following compound is cited: for example, an intramolecular salt compound which has a positive charge such as a quaternary ammonium cation and a negative charge such as a carboxylate anion at non-neighboring positions in the same molecule and in which no hydrogen atom that can be dissociated is bonded to an atom having a positive charge.

Examples of the intramolecular salt compound (betaine) include, but are not limited to, lysine betaine, ornitine betaine, homarine, trigonelline, alanine betaine, taurobetaine, phenylalanylbetaine carnitine, homoserine betaine, valine betaine, trimethylglycine (glycine betaine), stachydrine, γ-butyrobetaine, betaine lauryldimethylaminoacetate, lauryl hydroxysulfobetaine, betaine stearyldimethylaminoacetate, lauramidopropyl betaine, cocamidopropyl betaine, and betaine glutamate. Among these, one or more selected from carnitine, trimethylglycine, and trimethylglycine is used because of the effect of trapping the cationic compound. These betaines used may be commercially available products.

Pretreatment marks are probably derived from the reaction of the cationic compound in the pretreatment agent with components contained in fabric. However, since the treatment solution contains betaine, the reaction of the cationic compound with components contained in fabric (textile) is suppressed. This is because the cationic compound is trapped by betaine and is unlikely to react with components contained in fabric. The cationic compound trapped by betaine is detrapped from betaine by performing textile printing using a colorant and reacts with the colorant and the like. Therefore, the colorant and the like are aggregated to enhance chromogenic properties. Thus, the treatment solution composition can be provided such that chromogenic properties are ensured and the occurrence of pretreatment marks is reduced more than ever. Furthermore, the appearance quality of a product prepared by textile printing can be enhanced.

Betaine is probably present in the treatment solution in such a state that betaine has trapped at least a certain amount of the cationic compound. Therefore, in a case where the treatment solution is applied to fabric in pretreatment, the amount of the cationic compound reacting with a component contained in the fabric is reduced and the occurrence of pretreatment marks is reduced. Thereafter, performing textile printing using an aqueous ink composition allows the cationic compound to be detrapped because the cationic compound is highly compatible with the aqueous ink composition, thereby exhibiting the effect of aggregating pigment in the ink composition or the like.

The ratio of the content of betaine in the treatment solution to the content of the cationic compound therein is 0.2 or more on a mass basis, more preferably 0.3 or more on a mass basis, and further more preferably 0.6 or more on a mass basis. When the ratio of the content of betaine to the content of the cationic compound is as described above, the effect of trapping the cationic compound by betaine is likely to be exhibited. As a result, the occurrence of pretreatment marks is successfully reduced by the treatment solution.

The ratio of the content of betaine in the treatment solution to the content of the cationic compound therein is preferably 3.0 or less on a mass basis, more preferably 2.5 or less, and further more preferably 2.0 or less. When the ratio of the content of betaine to the content of the cationic compound is as described above, the occurrence strike-through can be reduced and chromogenic properties of a textile print can be enhanced.

The preferred content of betaine in the treatment solution varies depending on the color of fabric used. In a case where the treatment solution is applied to fabric dyed to black or blue, the ratio of the content of betaine in the treatment solution to the content of the cationic compound therein is preferably 1.25 or more and 2.0 or less on a mass basis from the viewpoint that the occurrence of treatment marks successfully reduced. In a case where the treatment solution is applied to fabric dyed to red, the ratio of the content of betaine in the treatment solution to the content of the cationic compound therein is preferably 0.6 or more and 1.25 or less on a mass basis from the viewpoint that the occurrence of treatment marks successfully reduced.

The content of betaine in the treatment solution is preferably 5.0% by mass or more with respect to the total mass of the treatment solution. This enables the occurrence of pretreatment marks to be further reduced.

The content of betaine in the treatment solution is preferably 20% by mass or less with respect to the total mass of the treatment solution. This allows appropriate wettability to fabric or permeation in fabric to be exhibited. Therefore, the treatment agent is likely to be uniformly absorbed in the fabric at an appropriate rate in a case where the treatment agent is applied to the fabric and the occurrence of density difference (uneven application) of the coating weight of the treatment agent that is caused in a case where the treatment agent is applied thereto can be reduced.

[Water]

Water is a main medium of the treatment solution according to this embodiment. Water is a component which is evaporated and scattered by drying after the treatment solution is applied to fabric. Examples of water that can be used include pure water products such as ion-exchanged water, ultrafiltered water, reverse osmosis-purified water, and distilled water and those, such as ultrapure water, obtained by removing ionic impurities as much as possible. Using water sterilized by ultraviolet irradiation or the addition of hydrogen peroxide enables the growth of mold and bacteria to be suppressed in a case where the treatment solution is stored for a long period.

The content of water in the treatment solution is not particularly limited and is 30% by mass to 95% by mass with respect to the total mass of the treatment solution. The content of water in the treatment solution is preferably 40% by mass to 90% by mass, more preferably 45% by mass to 85% by mass, and further more preferably 50% by mass to 80% by mass. Setting the content of water to the above range suppresses the increase in viscosity of the treatment solution to enable workability in applying the treatment solution to fabric and drying properties after application to be enhanced. Incidentally, water in the treatment solution includes water blended in, for example, a resin emulsion below or the like used as a raw material for the treatment solution.

[Resin Emulsion]

The resin emulsion may be added to the treatment solution. Adding the resin emulsion enables the fixation of pigment contained in the ink composition to fabric to be further enhanced. The resin emulsion may be used as a sealer suppressing the excessive permeation of the treatment solution and the ink composition into fabric.

The resin emulsion used is one obtained by dispersing resin micro-particles in an aqueous medium when the treatment solution contains water as a main medium as described in this embodiment. As a method for dispersing the resin micro-particles, a forced emulsification type in which an emulsifier (surfactant) is used, a spontaneous emulsification type in which a hydrophilic moiety (hydrophilic group) has been introduced into the molecular structure of the resin micro-particles or the like can be used. The resin micro-particles may have reactivity (crosslinking reactivity). The resin micro-particles used may be those having, for example, an isocyanate group masked with a blocking agent in the molecular structure.

Examples of material for forming the resin micro-particles include urethanic resins, vinyl acetate resins, acrylic resins, styrene-acrylic resins, and polyester resins. At least one of these can be used.

The average size of the resin micro-particles is preferably 30 nm to 300 nm and more preferably 40 nm to 100 nm. When the average particle size is within the above range, the dispersibility of the resin emulsion in the treatment solution and the fixation to fabric can be enhanced. In this specification, the term "average particle size" refers to a volume-based particle size distribution (50%) unless otherwise specified. The average particle size is measured by a dynamic light scattering method or laser diffraction light method specified in JIS Z 8825. In particular, a particle size distribution analyzer (for example, "Microtrac UPA" manufactured by Nikkiso Co., Ltd.) in which the dynamic light scattering method is used as a measurement principle.

The resin emulsion used may be a commercially available product. Examples of a urethanic resin emulsion include SUPERFLEX® 150, 420, 460, 470, 500, 610, 700, 800, 870, 6E-2000, E-2500, E-4000, R-5000 (the above, Dai-ichi Kogyo Seiyaku Co., Ltd.), ADEKA BONTIGHTER® HUX-290K, 380, 822, 830 (the above being trade names, Adeka Corporation), Takelac® W-6020, 6021, 6061, 605, 635 (the above being trade names, Mitsui Chemical Polyurethane Inc.), Permarin® UA-150 (a trade name, Sanyo Chemical Industries, Ltd.), Sancure® 2710 (a trade name, Japan Lubrizol Corporation), NeoRez® R-940 9637, and 9660 (the above being trade names, Kusumoto Chemicals, Ltd.).

Examples of a vinyl acetate resin emulsion include Vinyblan® 1245L (a trade name, Nissin Chemical Industry Co., Ltd.), Polysol® SH-502, AD-2, 10, 13, 17, 70, 96 (the above being trade names, Showa Denko K.K.), and Seikadain® 1900W (a trade name, Dainichiseika Color & Chemicals Mfg. Co., Ltd.).

Examples of an acrylic resin emulsion include Voncoat® AN-402, R-3310, R-3360, 4001 (the above being trade names, DIC Corporation), Polysol® AM-710, 920, 2300, AP-4735, AT-860, PSASE-4210E (the above being trade names, Showa Denko K.K.), Saibinol® SK-200 (Saiden Chemical Industry Co., Ltd.), AE-120A (a trade name, JSR Corporation), Vinyblan® 2650, 2680, 2682, 2684, 2886, 5202 (trade names, Nissin Chemical Industry Co., Ltd.), and NK-Binder R-5HN (a trade name, Shin-Nakamura Chemical Co., Ltd.).

Examples of a styrene-acrylic resin emulsion include Microgel® E-1002, 5002 (the above being trade names, Nippon Paint Co., Ltd.), Voncoat® 5454 (a trade name, DIC Corporation), Polysol® AP-7020 (the above being a trade name, Showa Denko K.K.), SAE 1014 (a trade name, ZEON Corporation), AE 373D (a trade name, Emulsion Technology Co., Ltd.), Joncryl® 390, 450, 511, 631, 632, 711, 734, 741, 775, 780, 790, 840, 852, 1535, 7001, 7100, 7600, 7610, 7640, 7641, 74J, 352D, 352J, 537J, 538J, HRC-1645J, PDX-7145, 7630A (the above being trade names, BASF), Mowinyl® 966A, and 7320 (The Nippon Synthetic Chemical Industry Co., Ltd.).

Examples of a polyester resin emulsion include Elitel® KA-5071S, KT-8701, 8803, 8904, 9204, 0507 (the above being trade names, Unitika Ltd.), and Hytec SN-2002 (a trade name, Toho Chemical Industry Co., Ltd.).

The content of the resin emulsion in the treatment solution in terms of solid matter is preferably 1% by mass to 20% by mass with respect to the total mass of the treatment solution, more preferably 1.5% by mass to 15% by mass, and further more preferably 2% by mass to 10% by mass. Setting the content of the resin emulsion in terms of solid matter to the above range suppresses the increase in viscosity of the treatment solution and enables the washing fastness, friction fastness, and the like of a textile print to be enhanced.

[Surfactant]

Furthermore, a surfactant may be added to the treatment solution. The surfactant has the function of reducing the surface tension of the treatment solution to increase permeability into fabric. Examples of the surfactant include nonionic surfactants, anionic surfactants, cationic surfactants, and amphoteric surfactants. At least one of these can be used.

In a case where the surfactant is added to the treatment solution, the content is preferably 0.3% by mass or less with respect to the total mass of the treatment solution, more preferably 0.25% by mass or less, and further more preferably 0.2% by mass or less. Setting the content of the surfactant to the above range suppresses the excessive reduction in surface tension of the treatment solution and allows the treatment solution to be likely to be held near a surface of fabric in a case where the treatment solution is applied to the fabric. This enables functions of the treatment solution to be likely to be exhibited.

The nonionic surfactants used may be acetylene glycol surfactants, fluorinated surfactants, silicone surfactants, and the like. Using these surfactants enables wettability to fabric to be enhanced at a relatively low content.

Examples of the acetylene glycol surfactants include, but are not limited to, 2,4,7,9-tetramethyl-5-decyne-4,7-diol, an alkylene oxide adduct of 2,4,7,9-tetramethyl-5-decyne-4,7-diol, 2,4-dimethyl-5-decyne-4-diol, an alkylene oxide adduct of 2,4-dimethyl-5-decyne-4-diol, 3,6-dimethyl-4-octyne-3,6-diol, 3,5-dimethyl-1-hexyne-3-ol, and alkylene oxide adducts of 2,4-dimethyl-5-hexyne-3-ol and the like.

The acetylene glycol surfactants used may be commercially available products. Examples of the acetylene glycol surfactants include SURFYNOL® 104, 104E, 104H, 104A, 104BC, 104DPM, 104PA, 104PG-50, 104S, 420, 440, 465, 485, SE, SE-F, 504, 61, DF37, CT111, CT121, CT131, CT136, TG, GA, DF110D (the about being trade names, Air Products and Chemicals, Inc.), Olfine® B, Y, P, A, STG, SPC, E1004, E1010, PD-001, PD-002W, PD-003, PD-004, EXP. 4001, EXP. 4036, EXP. 4051, AF-103, AF-104, AK-02, SK-14, AE-3 (the about being trade names, Nissin Chemical Industry Co., Ltd.), Acetylenol® E00, E00P, E40, and E100 (the about being trade names, Kawaken Fine Chemicals Co., Ltd.).

The fluorinated surfactants used may be commercially available products. Examples of the fluorinated surfactants include MEGAFACE® F-479 (a trade name, DIC Corporation) and BYK-340 (a trade name, BYK Chemie).

The silicone surfactants used are not particularly limited and may be polysiloxane compounds. Examples of the polysiloxane compounds include, but are not limited to, polyether-modified organosiloxanes. Examples of commercially available products of polyether-modified organosiloxanes include BYK-302, 306, 307, 333, 341, 345, 346, 347, 348 (the above being trade name, BYK Chemie), KF-351A, 352A, 353, 354L, 355A, 615A, 945, 640, 642, 643, 6020, 6011, 6012, 6015, 6017, and X-22-4515 (the above being trade name, Shin-Etsu Chemical Co., Ltd.).

Examples of the anionic surfactants include higher fatty acid salts, soap, $\alpha$-sulfo fatty acid methyl esters, alkylbenzenesulfonates, alkyl sulfates, alkyl ether sulfates, monoalkyl phosphates, $\alpha$-olefin sulfonates, alkylnaphthalenesulfonates, naphthalenesulfonates, alkanesulfonates, polyoxyethylene alkyl ether sulfates, sulfosuccinates, and polyoxyalkylene glycol alkyl ether phosphates.

Examples of the cationic surfactants include quaternary ammonium salt compounds such as alkyltrimethylammonium salts, dialkyldimethylammonium salts, and alkyldimethylbenzylammonium salts and amine salt compounds such as N-methyl-bis(hydroxyethyl)amine fatty acid ester hydrochlorides. The cationic surfactants used may be those described above as cationic compounds.

Examples of the amphoteric surfactants include, but are not limited to, amino acid compounds such as alkylamino fatty acid salts.

The above-mentioned surfactants may be used alone or in combination. Among these, a surfactant with an HLB (hydrophilic-lipophilic balance) value of 13 or more is preferably used. This enables permeation and wet spreading in fabric to be adjusted in a case where the treatment solution is applied to the fabric.

[Other Components]

Various additives such as a pH adjustor, a preservative, a fungicide, an oxidation inhibitor, and a chelating agent and an organic solvent may be added to the treatment solution.

Examples of the pH adjustor include, but are not limited to, organic bases and inorganic bases. Examples of the organic bases include alkanolamines such as triethanolamine, diethanolamine, monoethanolamine, and tri-iso-propanolamine. The inorganic bases used may be, for example, strong bases such as lithium hydroxide, potassium hydroxide, and calcium hydroxide, the strong bases being hydroxides of alkali metals or alkaline-earth metals.

Examples of the preservative or the fungicide include sodium benzoate, sodium pentachlorophenolate, 2-pyridinethiol-1-oxide sodium, sodium sorbate, sodium dehydroacetate, and 1,2-dibenzotiazolin-3-one (LONZA's trade names: PROXEL CRL, PROXEL BDN, PROXEL GXL, PROXEL XL-2, and PROXEL TN). Adding the preservative or the fungicide to the treatment solution enables the growth of bacteria and mold in the treatment solution to be suppressed.

Physical properties, such as viscosity and surface tension, of the treatment solution or drying properties of the treatment solution may be adjusted by adding the organic solvent thereto. In a case where the organic solvent is added, an organic solvent used in the ink composition can be used as described below.

As described above, the treatment solution according to this embodiment is used in such a manner that the treatment solution is applied to fabric serving as a base material of a textile print in advance in a case where the textile print is manufactured by applying (printing) the ink composition. The treatment solution is different from the ink composition. The treatment solution according to this embodiment preferably has a colorant content less than or equal to a specific value as described below. In particular, the content of a colorant is preferably 0.5% by mass or less with respect to the total mass of the treatment solution, more preferably 0.1% by mass or less, and further more preferably 0.05% by mass or less. It is particularly preferable that the colorant is not contained (0% by mass).

[Method for Preparing Treatment Solution]

The treatment solution can be prepared in such a manner that the above-mentioned components are mixed in an arbitrary order and impurities and contaminants are removed by filtration as required. As a method for mixing the components, the following method is used: a method in which materials (components) are sequentially added to a container equipped with a stirrer such as a mechanical stirrer or a magnetic stirrer, followed by agitation and mixing. A filtration method used may be centrifugal filtration or filter filtration.

[Physical Properties of Treatment Solution]

Physical properties of the treatment solution are arbitrarily adjusted depending on the type of fabric, a method for applying the treatment solution to the fabric (application method), or the like. The method for applying the treatment solution is described below.

The viscosity of the treatment solution at 20 °C is not particularly limited. The viscosity thereof is preferably 1.5 mPa·s (millipascal seconds) to 100 mPa·s, more preferably 1.5 mPa·s to 50 mPa·s, and further more preferably 1.5 mPa·s to 20 mPa·s. Setting the viscosity of the treatment solution to the above range enables application properties, such as spreading, of the treatment solution applied to fabric to be enhanced.

When an application method used is an ink jet method, the viscosity of the treatment solution at 20 °C is preferably 1.5 mPa·s to 15 mPa·s, more preferably 1.5 mPa·s to 10 mPa·s, and further more preferably 1.5 mPa·s to 7.0 mPa·s. Setting the viscosity in the case of using the ink jet method to the above range enhances the discharge stability of the treatment solution from an ink jet head and enables the processing time of a step of applying the treatment solution to be reduced.

The viscosity of the treatment solution is measured using, for example, a rheometer, MCR-300 (Pysica). In particular, the viscosity of the treatment solution can be measured in such a manner that the temperature of the treatment solution is adjusted to 20 °C and the shear viscosity (mPa·s) at a shear rate of 200 (1/s) is read out.

The surface tension of the treatment solution at 25 °C is preferably, for example, 30 mN/m to 50 mN/m and more preferably 35 mN/m to 45 mN/m. Setting the surface tension of the treatment solution at 25 °C to the above range allows appropriate wettability to fabric or permeability in fabric to be exhibited, allows the treatment agent to be likely to be uniformly absorbed in fabric at an appropriate rate when the treatment agent is applied to the fabric, and enables the occurrence of density difference (uneven application) of the coating weight of the treatment agent that is caused in a case where the treatment agent is applied to be reduced.

The surface tension of the treatment solution is measured using, for example, an automatic surface tensiometer, CBVP-Z (Kyowa Interface Science Co., Ltd.). In particular, the surface tension can be determined in such a manner that the surface tension is read out when a platinum plate is wetted with the treatment solution in a 25 °C atmosphere.

[Ink Composition]

Next, the ink composition, which is used to manufacture a textile print by printing the ink composition to fabric provided with the treatment solution according to this embodiment, is described. As described above, the ink composition according to this embodiment is an aqueous ink composition for textile printing and is preferably an aqueous ink composition for ink jet textile printing. Components contained in the ink composition according to this embodiment are described below.

[Colorant]

The ink composition according to this embodiment uses dye or pigment as a colorant. Examples of the dye include water-soluble dyes such as acidic dyes and basic dyes, disperse dyes used in combination with a dispersant (surfactant), and reactive dyes. he dye is printed in such a manner that molecules of the dye and functional groups of material forming fabric form chemical bonds to dye the fabric. These dyes used may be those well-known.

The ink composition according to this embodiment enables steps such as a dyeing step and a washing step to be simplified as compared to dye and is, therefore, preferably a pigment textile printing ink in which pigment is used as a colorant. That is, the treatment solution according to this embodiment is preferably used for pigment textile printing and is more preferably used for ink jet pigment textile printing.

The pigment used may be either of a known organic pigment and inorganic pigment. Examples of the organic pigment include azo pigments such as azo lake pigments, insoluble azo pigments, condensed azo pigments, and chelate azo pigments; polycyclic pigments such as phthalocyanine pigments, perylene pigments, perinone pigments, anthraquinone pigments, quinacridone pigments, dioxazine pigments, thioindigo pigments, isoindolinone pigments, isoindoline pigments, quinophthalone pigments, and diketopyrrolopyrrole pigments; dye lake pigments such as basic dye lakes and acidic dye lakes; nitro pigments; nitroso pigments; aniline black; and daylight fluorescent pigments. Examples of the inorganic pigment include metal oxide pigments such as titanium dioxide, zinc oxide, and chromium oxide and carbon black. A glitter pigment such as a pearl pigment or a metallic pigment may be used.

Examples of such pigment for black ink compositions include C.I. (Colour Index Generic Name) Pigment Blacks 1, 7, and 11. Among these, a carbon black series (C.I. Pigment Black 7) which has relatively low density and which is unlikely to sink in an aqueous medium is preferable for ink jet textile printing.

Examples of pigment for color ink compositions include C.I. Pigment Yellows 1, 3, 12, 13, 14, 17, 24, 34, 35, 37, 42, 53, 55, 74, 81, 83, 95, 97, 98, 100, 101, 104, 108, 109, 110, 117, 120, 138, 153, 155, and 180; C.I. Pigment Reds 1, 2, 3, 5, 17, 22, 23, 31, 38, 48:2 (Permanent Red 2B(Ba)), 48:2 (Permanent Red 2B(Ca)), 48:3, 48:4, 49:1, 52:2, 53:1, 57:1, 60:1, 63:1, 63:2, 64:1, 81, 83, 88, 101, 104, 105, 106, 108, 112, 114, 122, 123, 146, 149, 166, 168, 170, 172, 177, 178, 179, 185, 190, 193, 209, and 219; C.I. Pigment Violets 19 and 23; C.I. Pigment Blues 1, 2, 15, 15:1, 15:2, 15:3, 15:4, 15:6, 16, 17:1, 56, 60, and 63; and C.I. Pigment Greens 1, 4, 7, 8, 10, 17, 18, and 36. The average particle size of the above pigment is preferably 5 $\mu$m or less, more preferably 0.3 $\mu$m or less, and further more preferably within the range of 0.01 $\mu$m to 0.15 $\mu$m. Setting the average particle size of the pigment to the above range ensures discharge stability from an ink jet head and enables chromogenic properties of the pigment in a textile print to be enhanced.

The treatment solution according to this embodiment is preferably used in combination with a white ink composition because chromogenic properties of the colorant are ensured. In particular, there is a method in which a base is formed by printing the white ink composition in a case where a color image or the like is printed on a color fabric colored in advance. This is performed for the purpose of reducing the interference of fabric's color (the color of a textile) with the printed color image and the purpose of enhancing the color development of the image. That is, using the treatment solution according to this embodiment and the white ink composition enables an image with a desired color or the like to be printed regardless of the color of a textile because hiding properties are enhanced by chromogenic properties of a white pigment.

Examples of a white pigment for the white ink composition include C.I. Pigment Whites 1 (basic lead carbonate), 4 (zinc oxide), 5 (a mixture of zinc sulfide and barium sulfate), 6 (titanium dioxide), 6:1 (titanium dioxide containing another metal oxide), 7 (zinc sulfate), 18 (calcium carbonate), 19 (clay), 20 (titanium dioxide-coated mica), 21 (barium sulfate), 22 (gypsum), 26 (magnesium oxide/silicon dioxide), 27 (silicon dioxide), and 28 (calcium silicate anhydride). Among these, C.I. Pigment White 6, which has excellent chromogenic properties, hiding properties, and the like, is preferably used.

The average particle size of the white pigment is preferably within the range of 100 $\mu$m to 500 $\mu$m, more preferably 150 $\mu$m to 450 $\mu$m, and further more preferably 200 $\mu$m to 400 $\mu$m. Setting the average particle size of the white pigment to the above range enables discharge stability from an ink jet head to be ensured. Furthermore, hiding properties for the color dyed to a fabric textile in advance can be enhanced.

In this specification, the term "average particle size" refers to a volume-based particle size distribution (50%) unless otherwise specified. Substantially the same method as that used to measure the average particle size of the above-mentioned resin micro-particles can be used to measure the average particle size of pigment.

In a case where pigment is used, the content thereof is not particularly limited. The content thereof is preferably, for example, 0.1% by mass to 30% by mass with respect to the total mass of the ink composition, more preferably 1% by mass to 20% by mass, and further more preferably 1% by mass to 15% by mass. Setting the content of the pigment to the above range ensures chromogenic properties of the pigment in a textile print obtained by textile printing and enables the increase in viscosity of the ink composition and the occurrence of clogging of an ink jet head to be reduced.

The above-mentioned pigments may be used alone or in combination. The pigments are preferably surface-treated or the ink composition is preferably blended with a dispersant or the like for the purpose of increasing the dispersibility in the ink composition. The surface treatment of pigment is a method in which hydrophilic groups such as carboxy groups or sulfo groups are introduced to the surfaces of particles of the pigment by physical treatment or chemical treatment. The surface treatment of the pigment enables the pigment to be dispersed in an aqueous medium such as water.

A dispersant for use in an aqueous medium has such an action that hydrophobic moieties (hydrophobic groups) in a molecular structure are adsorbed on the surfaces of particles of pigment and hydrophilic moieties (hydrophilic groups) are oriented on the medium side. This action enables the pigment to be dispersed in the aqueous medium. The dispersant used is a known surfactant or polymeric compound. A method in which the pigment particles are coated with the polymeric compound or the like such that dispersibility is imparted may be used. An acid precipitation method, a phase-inversion emulsification method, a mini-emulsion polymerization method, or the like can be used as a method for coating the pigment particles.

[Water]

The ink composition according to this embodiment is the aqueous pigment ink composition and water is the main medium of the ink composition according to this embodiment as described above. After the ink composition is applied to fabric, water is evaporated and scattered by drying. Water used may be one that is substantially the same as that in the above-mentioned treatment solution. The content of water in the ink composition is preferably, for example, 30% by mass to 90% by mass with respect to the total mass of the ink composition, more preferably 40% by mass to 85% by mass, and further more preferably 50% by mass to 80% by mass. Setting the content of water to the above range enables the increase in viscosity of the ink composition to be reduced. In this specification, the term "aqueous ink composition" refers to an ink composition in which the content of water is 30% by mass or more with respect to the total mass of the ink composition.

[Organic Solvent]

An organic solvent may be added to the ink composition. Adding the organic solvent enables physical properties such as viscosity and surface tension and behaviors such as drying and permeation to be adjusted in a case where the ink composition is applied to fabric. Examples of the organic solvent include 2-pyrrolidones, 1,2-alkanediols, polyalcohols, and glycol ethers. These may be used alone or in combination.

The term "2-pyrrolidones" refers to compounds having a 2-pyrrolidone skeleton. Examples of the 2-pyrrolidones include 2-pyrrolidone containing no substituent and compounds, such as N-methyl-2-pyrrolidone, N-ethyl-2-pyrrolidone, and N-vinyl-2-pyrrolidone, containing a substituent. A substituent in the 2-pyrrolidone skeleton is preferably an organic group such as a saturated or unsaturated hydrocarbon group containing one to five carbon atoms. Among these, 2-pyrrolidone, which is excellent in the storage stability of the ink composition and in the effect of reducing the occurrence of aggregates, is preferably used.

Examples of the 1,2-alkanediols include 1,2-propanediol, 1,2-butanediol, 1,2-pentanediol, 1,2-hexanediol, and 1,2-octanediol. The 1,2-alkanediols are excellent in the effect of enhancing the wettability of the ink composition to fabric to evenly wet the fabric. Therefore, an image with reduced bleeding can be formed. In a case where the 1,2-alkanediols are added, the content thereof is preferably 1% by mass to 20% by mass with respect to the total mass of the ink composition.

Examples of the polyalcohols include ethylene glycol, diethylene glycol, triethylene glycol, propylene glycol, dipropylene glycol, 1,3-propanediol, 1,3-butanediol, 1,3-pentanediol, 1,4-butanediol, 1,5-pentanediol, 1,6-hexanediol, 2,3-butanediol, 3-methyl-1,3-butanediol, 3-methyl-1,5-pentanediol, 2-methyl-1,3-propanediol, 2,2-dimethyl-1,3-propanediol, 2-methyl-2,4-pentanediol, and glycerin. Adding the polyalcohols to the ink composition suppresses the drying or solidification of the ink composition in a discharge nozzle of an ink jet head to enable the clogging or discharge failure of the discharge nozzle to be reduced. In a case where the polyalcohols are added, the content thereof is preferably 2% by mass to 20% by mass with respect to the total mass of the ink composition. Polyalcohols that are solid at 20 °C have substantially the same effect as that of the polyalcohols of the organic solvent and may be similarly used. Examples of the polyalcohols that are solid at 20 °C include trimethylolpropane.

Examples of the glycol ethers include alkylene glycol monoethers and alkylene glycol diethers.

Examples of the alkylene glycol monoethers include ethylene glycol monomethyl ether, ethylene glycol monoethyl ether, ethylene glycol monoisopropyl ether, ethylene glycol monobutyl ether, ethylene glycol monohexyl ether, ethylene glycol monophenyl ether, diethylene glycol monomethyl ether, diethylene glycol monoethyl ether, diethylene glycol monobutyl ether, diethylene glycol monohexyl ether, triethylene glycol monomethyl ether, triethylene glycol monoethyl ether, triethylene glycol monobutyl ether (butyl triglycol), tetraethylene glycol monomethyl ether, tetraethylene glycol monoethyl ether, propylene glycol monomethyl ether, propylene glycol monoethyl ether, dipropylene glycol monomethyl ether, and dipropylene glycol monoethyl ether.

Examples of the alkylene glycol diethers include ethylene glycol dimethyl ether, ethylene glycol diethyl ether, ethylene glycol dibutyl ether, diethylene glycol dimethyl ether, diethylene glycol diethyl ether, diethylene glycol methyl ethyl ether, diethylene glycol dibutyl ether, diethylene glycol butyl methyl ether, triethylene glycol dimethyl ether, triethylene glycol diethyl ether, triethylene glycol dibutyl ether, triethylene glycol butyl methyl ether, tetraethylene glycol dimethyl ether, tetraethylene glycol diethyl ether, tetraethylene glycol dibutyl ether, propylene glycol dimethyl ether, propylene glycol diethyl ether, dipropylene glycol dimethyl ether, and dipropylene glycol diethyl ether.

Adding the glycol ethers to the ink composition enables wettability to fabric and the permeation rate to be adjusted. In a case where the glycol ethers are added, the content thereof is preferably 0.05% by mass to 6% by mass with respect to the total mass of the ink composition.

The above-mentioned organic solvents may be used in combination. In this case, the total content of the organic solvents in the ink composition is 0.2% by mass to 30% by mass with respect to the total mass of the ink composition, preferably 0.4% by mass to 20% by mass, more preferably 0.5% by mass to 15% by mass, and further more preferably 0.7% by mass to 10% by mass. Setting the total content of the organic solvents within the above range enables the increase in viscosity of the ink composition to be suppressed, behaviors (permeation and wet spreading) of the ink composition in fabric to be adjusted, and the discharge failure of an ink jet head to be reduced.

[Surfactant]

A surfactant may be added to the ink composition. The surfactant has the function of reducing the surface tension of the ink composition to increase permeability into fabric. Examples of the surfactant include nonionic surfactants, anionic surfactants, cationic surfactants, and amphoteric surfactants. At least one of these can be used. These surfactants used may be those that are substantially the same as the above-mentioned treatment solution.

Adding the surfactant to the ink composition suppresses foaming to ensure discharge stability from an ink jet head and enables the ink composition to readily come into contact with a component of the treatment solution applied to fabric.

[Chelating Agent]

A chelating agent may be added to the ink composition. The chelating agent has the function of trapping metal ions and the like. Therefore, using the chelating agent in the ink composition enables metal ions which are contained in the ink composition in the form of impurities or which are contaminated from a member in contact with the ink composition to be trapped, thereby enabling the occurrence of contaminants derived from the metal ions to be reduced. Examples of the chelating agent include ethylenediaminetetraacetate (EDTA), nitrilotriacetate of ethylenediamine, hexametaphosphate, pyrophosphate, and metaphosphate.

[pH Adjustor]

A pH adjustor may be added to the ink composition. Examples of the pH adjustor include, but are not limited to, organic bases and inorganic bases. The pH of the ink composition is preferably adjusted to the range of 7.5 to 10.5 using the pH adjustor. Adjusting the pH of the ink composition to the above range enables the corrosion of a member such as an ink-repellent film to be reduced in an ink jet textile printing apparatus or the like including an ink jet head.

Examples of the organic bases include alkanolamines such as triethanolamine, diethanolamine, monoethanolamine, and tri-iso-propanolamine. Herein, in order to adjust the pH of the ink composition to the above range using these organic bases, relatively large amounts of these organic bases need to be added. In particular, the content with respect to the total mass of the ink composition is, for example, about 0.1% by mass to 3% by mass.

The inorganic bases used may be, for example, strong bases such as lithium hydroxide, potassium hydroxide, and calcium hydroxide, the strong bases being hydroxides of alkali metals or alkaline-earth metals. In order to adjust the pH of the ink composition to the above range using these inorganic bases, the content with respect to the total mass of the ink composition may be, for example, about 0.03% by mass to 0.15% by mass. As described above, these inorganic bases are effective in smaller amounts as compared to these organic bases and have no smell unlike these organic bases. Therefore, these inorganic bases are preferably used.

[Resin]

Resin serving as a fixing agent may be added to the ink composition. Adding the resin enhances the washing fastness and friction fastness of a textile print and enables fluffing to be reduced. The resin used may be substantially the same resin emulsion as the above-mentioned treatment solution. A water-soluble resin may be used in addition to the resin emulsion. Examples of the water-soluble resin include carboxymethylcellulose, cellulose acetate, hydroxyethylcellulose, and salts of these.

The content of the resin is preferably 2% by mass to 25% by mass in terms of solid matter with respect to the total mass of the ink composition, more preferably 4% by mass to 15% by mass, and further more preferably 5% by mass to 11% by mass. Setting the content of the resin to the above range reduces the occurrence of clogging of a nozzle of an inkjet head and enables the washing fastness and friction fastness of a textile print to be enhanced.

[Other Components]

Various additives, such as an oxidation inhibitor, a preservative, and a fungicide, similar to those in the treatment solution may be appropriately used as other components in the ink composition.

[Preparation of Ink Composition]

The ink composition according to this embodiment can be prepared in such a manner that the above-mentioned components are mixed in an arbitrary order and impurities and contaminants are removed by filtration as required. As a method for mixing the components, the following method is used: a method in which materials (components) are sequentially added to a container equipped with a stirrer such as a mechanical stirrer or a magnetic stirrer, followed by agitation and mixing. As a filtration method, centrifugal filtration or filter filtration can be used.

[Physical Properties of Ink Composition]

The viscosity of the ink composition at 20 °C is preferably 1.5 mPa·s to 15 mPa·s, more preferably 1.5 mPa·s to 10 mPa·s, and further more preferably 1.5 mPa·s to 7.0 mPa·s. Setting the viscosity of the ink composition to the above range enables the discharge stability and discharge rate of the ink composition from an ink jet head to be ensured. When the viscosity is outside the above range, the discharge stability of the ink composition can be ensured by varying conditions for discharging the ink composition from the ink jet head or the type of the ink jet head in some cases. The discharge stability can be ensured up to 22 mP·a under, for example, temperature-controlled conditions in some cases. The viscosity of the ink composition can be measured by substantially the same method as that for the above-mentioned treatment solution.

The surface tension of the ink composition at 25 °C is preferably, for example, 10 mN/m to 40 mN/m and more preferably 25 mN/m to 40 mN/m. Setting the surface tension of the ink composition at 25 °C to the above range enables wetting fabric and the contact of the ink composition with components of the treatment solution applied to the fabric to be facilitated in a case where the fabric is printed. The viscosity and surface tension of the ink composition can be measured by substantially the same method as that for the above-mentioned treatment solution.

[Ink Jet Textile Printing Apparatus]

[Printer]

Next, an ink jet textile printing apparatus according to this embodiment is described with reference to FIG. 1. The ink jet textile printing apparatus is an apparatus for performing textile printing in such a manner that droplets are landed on fabric by an ink jet method in which fine droplets of an ink composition are discharged. FIG. 1 is a schematic perspective view of the ink jet textile printing apparatus according to an embodiment. In this embodiment, the ink jet textile printing apparatus is described using an on-carriage type of printer including an ink cartridge mounted on a carriage as an example. In FIG. 1, in order to show members in recognizable sizes, the scales of the members differ from actual scales.

A printer 1 according to this embodiment is one called a so-called serial printer. The term "serial printer" refers to a printer in which an inkjet head is mounted on a carriage moving in a predetermined direction and in which the ink jet head moves with the movement of the carriage to perform printing.

As shown in FIG. 1, the printer 1 includes an ink jet head 3, a carriage 4, a main scanning mechanism 5, a platen roller 6, and a control section (not shown) controlling the operation of the whole printer 1. The carriage 4 has the ink jet head 3 mounted thereon and includes ink cartridges 7a, 7b, 7c, 7d, 7e, and 7f which store ink compositions supplied to the ink jet head 3 and which are detachable.

The main scanning mechanism 5 includes a timing belt 8 connected to the carriage 4, a motor 9 driving the timing belt 8, and a guide shaft 10. The guide shaft 10 serves as a support member for the carriage 4 and extends in a scanning direction (main scanning direction) of the carriage 4. The carriage 4 is driven by the motor 9 with the timing belt 8 therebetween and can reciprocate along the guide shaft 10. This allows the main scanning mechanism 5 to have the function of reciprocating the carriage 4 in the main scanning direction.

The platen roller 6 has the function of transporting fabric 2 subjected to textile printing in a sub-scanning direction (a length direction of the fabric 2) perpendicular to the main scanning direction. Therefore, the fabric 2 is transported in the sub-scanning direction. The carriage 4, on which the ink jet head 3 is mounted, can reciprocate in the main scanning direction, which substantially coincides with a width direction of the fabric 2. The ink jet head 3 can relatively scan the fabric 2 in the main scanning direction and the sub-scanning direction.

The ink cartridges 7a, 7b, 7c, 7d, 7e, and 7f are independent six cartridges. The ink cartridges 7a, 7b, 7c, 7d, 7e, and 7f can store the ink composition according to this embodiment. Ink compositions exhibiting colors such as black, cyan, magenta, yellow, white, and orange are separately stored in these ink cartridges and can be arbitrarily used in combination. Referring to FIG. 1, the number of the ink cartridges is, but is not limited to, six. Bottom portions of the ink cartridges 7a, 7b, 7c, 7d, 7e, and 7f are provided with supply ports (not shown) for supplying the ink compositions stored in the ink cartridges to the ink jet head 3.

The ink jet head 3 has a nozzle surface (not shown) facing the fabric 2. The nozzle surface has nozzle arrays (not shown) which are each composed of a plurality of nozzles (not shown) and which are individually arranged to correspond to color ink compositions. Each of the color ink compositions is supplied from a corresponding one of the ink cartridges to the ink jet head 3 and is discharged from a nozzle with an actuator (not shown) in the ink jet head 3 in the form of droplets. Droplets of the discharged ink compositions are landed on the fabric 2, whereby an image, a text, a pattern, a color, or the like is formed in a textile printing area of the fabric 2.

In the ink jet head 3, the actuator (driving means) used is, but is not limited to, a piezoelectric element. The actuator used may be, for example, an electromechanical transducer displacing a diaphragm by electrostatic attraction or an electrothermal transducer discharging an ink composition in the form of droplets using bubbles generated by heating.

In this embodiment, the printer 1, which is of an on-carriage type, is used as an example of the ink jet textile printing apparatus. The ink jet textile printing apparatus is not limited to the printer 1. For example, an off-carriage type of printer in which an ink composition storage container such as an ink cartridge is not mounted on a carriage may be used. The ink jet textile printing apparatus, which is used in the present invention, is not limited to the above-mentioned serial printer and may be a line head printer which includes an ink jet head formed so as to have a width greater than or equal to the width of the fabric 2 and which performs textile printing without moving the ink jet head.

[Fabric]

Examples of the morphology of the fabric 2 according to this embodiment include clothes, wears, and other accessories. The clothes include woven fabrics, knitted fabrics, and nonwoven fabrics. The wears and other accessories include sewn T-shirts; handkerchiefs; scarves; towels; handbags; fabric bags; furniture such as curtains, sheets, bedcovers, and wallpaper; and cut or uncut clothes serving as unsewn parts. These morphologies include elongated goods wound into rolls, goods cut to a predetermined size, and goods with a product shape. The fabric 2 may be obtained by applying the treatment solution according to this embodiment. The fabric 2 used may be one provided with the treatment solution in advance.

Examples of material forming the fabric 2 include natural fiber such as cotton, silk, hemp, and wool and synthetic fibers such as polypropylene, polyester, acetate, triacetate, polyamide, polyurethane, and polylactic acid. The material forming the fabric 2 may be a fiber blend of these.

The area weight of the fabric 2 is 1.0 oz (ounce) to 10.0 oz, preferably 2.0 oz (ounce) to 9.0 oz, more preferably 3.0 oz to 8.0 oz, and further more preferably 4.0 oz to 7.0 oz. In the treatment solution according to this embodiment, chromogenic properties can be enhanced more than ever because a component of the treatment solution that is the cationic compound or the like is appropriately applied to the fabric 2, which has an area weight within the above range. A plurality of types of fabrics different in area weight can be used.

The fabric 2 used is preferably a cotton fabric colored with dye in advance. In the treatment solution according to this embodiment, chromogenic properties are ensured and the occurrence of pretreatment marks can be reduced. Therefore, the treatment solution can be successfully used for wears and other accessories, particularly cotton T-shirts colored in advance. That is, even if a textile has been colored, the textile can be printed such that chromogenic properties are good and the occurrence of pretreatment marks is reduced. Therefore, the quality and commercial value of a textile print as a product can be increased more than ever.

Examples of dye used to color the fabric 2 in advance include water-soluble dyes such as acidic dyes and basic dyes, disperse dyes used in combination with a dispersant (surfactant), and reactive dyes. When the fabric 2 used is a cotton fabric, a reactive dye suitable for dyeing cotton is preferably used.

The reactive dye used is preferably a triazine compound having a triazine structure in its molecule. For a reactive dye having a triazine structure, the state of dyeing is stabilized particularly in plant-based fiber such as cotton. However, the triazine compound reacts with cationic compounds such as polyvalent metal ions to cause pretreatment marks in some cases. In particular, in a cotton fabric darkly dyed to black or red, the occurrence of pretreatment marks tends to be significant.

The treatment solution according to this embodiment has the effect of reducing the occurrence of pretreatment marks and therefore can be successfully used for fabric dyed with the reactive dye having the triazine structure. That is, the fabric 2 is preferably dyed with the reactive dye having the triazine structure such that the triazine compound is contained in the fabric 2.

Among disperse dyes having a triazine structure, a monochlorotriazine dye is preferably used because the state of dyeing is more stable. Examples of the monochlorotriazine dye include, but are not limited to, C.I. Reactive Blues 15, 15:1, and 49; C.I. Reactive Reds 3, 3:1 24, and 31; C.I. Reactive Yellows 2 and 95; C.I. Reactive Blacks 8 and 39; C.I. Reactive Oranges 12 and 13; and C.I. Reactive Violet 1. At least one selected from this group can be used.

In addition to the dyes cited above, examples of the reactive dye include, but are not limited to, C.I. Reactive Blues 2, 3, 5, 7, 13, 14, 21, 25, 26, 38, 39, 40, 41, 46, 50, 69, 72, 109, 120, 143, and 176; C.I. Reactive Reds 2, 4, 7, 12, 13, 14, 15, 16, 29, 32, 33, 43, 45, 46, 55, 58, 59, 79, 106, 111, 124, and 218; C.I. Reactive Yellows 3, 6, 7, 12, 15, 18, 22, 37, 42, 57, 69, 76, 81, 86, 102, 125, 135, and 181; C.I. Reactive Blacks 1, 3, 4, 5, 10, 12, 13, 14, 31, 34, and 35; Huntsman Black; C.I. Reactive Oranges 2, 5, 20, and 99; C.I. Reactive Violets 1, 2, and 33; C.I. Reactive Greens 5 and 8; and C.I. Reactive Browns 1, 2, 7, 8, 9, 11, and 14. At least one selected from this group can be used.

As a method for coloring the fabric 2 with dye, a known method can be used depending on the material forming the fabric 2 or the morphology thereof.

[Ink Jet Textile Printing Method]

Next, an ink jet textile printing method according to this embodiment is described. The ink jet textile printing method according to this embodiment is a method in which textile printing is performed in such a manner that droplets of an ink composition are discharged by an ink jet method using the above-mentioned printer 1 (see FIG. 1) and are applied to the fabric 2 such that an image is formed.

The ink jet textile printing method according to this embodiment includes Step S1 of applying the treatment solution according to this embodiment to the fabric 2. Furthermore, the ink jet textile printing method includes Step S3 of applying a pigment textile printing ink serving as an ink composition to a region of the fabric 2 that is provided with the treatment solution.

In Step S1, the treatment solution is applied to at least one region of the fabric 2. Examples of an application method for applying the treatment solution to the fabric 2 include a method for immersing the fabric 2 in the treatment solution (immersion coating); a method for applying the treatment solution to the fabric 2 using a brush, a roller, a spatula, a roll coater, or the like (roller coating); a method for spraying the treatment solution with a sprayer or the like (spray coating); and a method for ejecting the treatment solution by an ink jet method (ink jet coating). Any of these methods may be used depending on the morphology or physical properties of the treatment solution. These methods may be used in combination. Among these methods, immersion coating, roller coating, spray coating, or the like is preferably used because the configuration of an apparatus is simple and the application of the treatment solution can be quickly performed.

In Step S1, the coating weight of the treatment solution applied to the fabric 2 per unit area of the fabric 2 is preferably 100 mg/inch$^2$ to 3,000 mg/inch$^2$, more preferably 130 mg/inch$^2$ to 15,000 mg/inch$^2$, and further more preferably 193 mg/inch$^2$ to 500 mg/inch$^2$. Setting the coating weight of the treatment solution to 0.02 g/cm$^2$ (129 mg/inch$^2$) or more allows the treatment solution to be relatively uniformly applied to the fabric 2 and therefore enables the occurrence of uneven coloring or the like to be reduced when the pigment textile printing ink is printed in a subsequent step. Setting the coating weight of the treatment solution to 0.5 g/cm$^2$ (3,226 mg/inch$^2$) or less enables the occurrence of bleeding to be reduced when the pigment textile printing ink is printed.

In Step S1, the coating amount of the cationic compound, contained in the treatment solution, applied to the fabric 2 per unit area of the fabric 2 is preferably 7.5 $\mu$mol/cm$^2$ to 40 $\mu$mol/cm$^2$ and more preferably 12 $\mu$mol/cm$^2$ to 30 $\mu$mol/cm$^2$. Setting the coating amount of the cationic compound to 10 $\mu$mol/cm$^2$ or more allows chromogenic properties of pigment to be enhanced when the pigment textile printing ink is printed in a subsequent step. Setting the coating amount of the cationic compound to 40 $\mu$mol/cm$^2$ or less allows the washing fastness of a textile print to be enhanced.

The ink jet textile printing method according to this embodiment may include Step S2 of drying the treatment solution applied to the fabric 2 after Step S1. Natural drying or drying by heating (heat drying) is used to dry the treatment solution. Heat drying is preferably used because the drying time can be reduced. Examples of a heating method for heat drying include, but are not limited to, a heat press method, an atmospheric pressure steam method, a highpressure steam method, and a thermofix method. A heat source for heating is not particularly limited and may be, for example, an infrared lamp or the like.

The drying temperature in heat drying is preferably the temperature at which resin micro-particles (emulsion) contained in the treatment solution are reduced in melt viscosity by heating in addition to the evaporation of a solvent, such as water, contained in the treatment solution such that the binding force due to an anchoring effect is exerted on fabric fibers. In particular, the drying temperature is, but is not limited to, about 100 °C to about 200 °C. Herein, the drying temperature in this step corresponds to the surface temperature of the treatment solution applied to the fabric 2 and can be measured with, for example, a noncontact thermometer, IT2-80 (a trade name, Keyence Corporation). The heating time for which heating is performed is, but is not limited to, for example, 30 seconds to 20 minutes.

Since the treatment solution according to this embodiment contains betaine, the cationic compound is trapped by betaine. Therefore, in Steps S1 and S2, even if the treatment solution is brought into contact with the fabric 2, the reaction of the cationic compound with a component contained in the fabric 2 is unlikely to occur; hence, the occurrence of treatment marks is reduced.

In Step S3, droplets of the pigment textile printing ink discharged from the ink jet head 3 (see FIG. 1) are landed on at least one portion of the region of the fabric 2 that is provided with the treatment solution as described above. In this operation, a component, such as pigment, contained in the pigment textile printing ink reacts with the cationic compound detrapped from betaine to aggregate near a surface of the fabric 2. Therefore, pigment is unlikely to migrate in an inward direction of the fabric 2 and chromogenic properties of the pigment are enhanced as compared to a case in which no cationic compound is used.

Using the ink jet method as a textile printing method eliminates a printing plate necessary for analogue textile printing such as screen textile printing to facilitate dealing with high-mix, low-volume production and enables a high-definition image, a text, a pattern, a color, or the like to be formed.

In Step S3, the coating weight of the pigment textile printing ink applied to the fabric 2 per unit area of the fabric 2 is preferably 1.5 mg/cm$^2$ to 6 mg/cm$^2$ and more preferably 2 mg/cm$^2$ to 5 mg/cm$^2$. Setting the coating weight of the pigment textile printing ink to the above range enhances chromogenic properties of an image formed by textile printing and ensures drying properties of the pigment textile printing ink applied to the fabric 2 to reduce the occurrence of bleeding in an image or the like. In a case where a base is formed on fabric colored in advance using a white ink composition or the like, the white ink composition is preferably applied in an amount exceeding the above coating weight.

The ink jet textile printing method may include Step S4 of heating the pigment textile printing ink applied to the fabric 2 as a step subsequent to Step S3. In Step S4, a heating method that is substantially the same as that used in above-mentioned Step S2. When resin is contained in the pigment textile printing ink, the heating temperature may be such that the resin is fused and a medium such as water evaporates. In particular, the heating temperature is, but is not limited to, about 100 °C to about 200 °C. Herein, the drying temperature in this step corresponds to the surface temperature of an image formed on the fabric 2 or the like. The drying temperature can be measured by a method that is substantially the same as that used in above-mentioned Step S2. The heating time for which heating is performed is, but is not limited to, for example, 30 seconds to 20 minutes.

The ink jet textile printing method may include Step S5 of water-washing and drying the fabric 2 subjected to textile printing after Step S4. In water washing, a component of the pigment textile printing ink or the like not fixed to the fabric 2 may be washed out using a hot soap solution as a soaping treatment as required. Through the above steps, a textile print is manufactured.

In this embodiment, the application of the treatment solution (Step S1) and textile printing (Step S3) are performed in, but are not limited to, the form of a series of steps. For example, the treatment solution according to the present invention may be stored or transported before textile printing is performed using the fabric 2 if the fabric 2 is pretreated by applying the treatment solution to the fabric 2.

As described above, in accordance with the treatment solution according to this embodiment and the ink jet textile printing method, effects below can be obtained.

In accordance with the treatment solution according to this embodiment, the occurrence of pretreatment marks can be reduced in the fabric 2 provided with the treatment solution. In particular, since betaine is contained, the reaction of the cationic compound, such as polyvalent metal ions, with a component contained in the fabric 2 is suppressed. This is because the cationic compound is trapped by betaine and is unlikely to react with a component contained in the fabric 2. Performing textile print using a colorant after pretreatment allows the cationic compound trapped by betaine to be detrapped from betaine, so that the reaction of the cationic compound with pigment or the like proceeds. Therefore, pigment and the like aggregate to enhance chromogenic properties. Thus, the treatment solution can be provided such that chromogenic properties are ensured and the occurrence of pretreatment marks is reduced more than ever. Furthermore, the appearance quality of a product (textile print) prepared by textile printing can be enhanced.

Since pigment textile printing is performed using pigment for a colorant, chromogenic properties of the colorant can be further enhanced. Steps such as a dyeing step and a washing step can be simplified as compared to dye. Furthermore, the type of applicable fibers is unlikely to be limited as compared to dye and textile printing can be performed for various types of fibers.

Since the fabric 2 used is a cotton fabric colored with dye, chromogenic properties are ensured and the occurrence of pretreatment marks is reduced. Therefore, the treatment solution can be successfully used for cotton fabrics such as T-shirts colored in advance among wears and other accessories. That is, even if a textile is colored, the textile can be printed such that the color development thereof is good and the occurrence of pretreatment marks is reduced; hence, the quality and commercial value of a textile print as a product can be increased more than ever.

Using a triazine compound such as a reactive dye to color the fabric 2 enables the state of dyeing to be stabilized in plant-based fiber such as cotton. Even if the triazine compound is used, the reaction of the triazine structure with the cationic compound is suppressed and the occurrence of pretreatment marks can be reduced because the treatment solution contains betaine.

When the cationic compound used is a calcium salt of a polyvalent metal salt, the occurrence of pretreatment marks is further reduced and chromogenic properties of pigment are further enhanced; hence, the treatment solution can be more successfully used for cotton fabrics and the like.

The treatment solution contains a sufficient with an HLB value of 13 or more. Therefore, when the treatment solution is applied to the fabric 2, permeation and wet spreading in the fabric 2 can be adjusted. The content of the surfactant is 0.3% by mass or less with respect to the total mass of the treatment solution. Therefore, the excessive reduction in surface tension of the treatment solution is suppressed and the treatment solution is likely to be held near a surface of the fabric when the treatment solution is applied to the fabric. This enables functions of the treatment solution to be readily exhibited.

In accordance with the ink jet textile printing method according to this embodiment, an ink jet textile printing method in which chromogenic properties are ensured and the occurrence of pretreatment marks is reduced more than ever can be provided.

Using the ink jet method eliminates a printing plate necessary for analogue textile printing to facilitate dealing with high-mix, low-volume production and enables a high-definition image or the like to be formed.

The fabric 2 can be provided such that chromogenic properties are ensured and the occurrence of pretreatment marks is reduced more than ever in a case where the fabric 2 is used for textile printing. That is, the appearance quality of a product prepared by textile printing can be enhanced.

Effects of this embodiment are described below in detail with reference to examples and comparative examples in which the treatment solution according to this embodiment were evaluated for pretreatment marks and chromogenic properties of a colorant.

(Preparation of Treatment Solutions)

The compositions of treatment solutions of Examples 1 to 44 and Comparative Examples 1 to 5 are shown in Tables 1, 2, and 3. In Tables 1 to 3, values in the tables are in mass percent and the content of an effective component (solid matter) is expressed except polyvalent metal salts, carnitine, trimethylglycine, $\gamma$-butyrobetaine, and a nonionic surfactant. Ion-exchanged water was adjusted and added such that the total mass of each treatment solution was 100.0% by mass. In the tables, a cell that is not filled with any value but with "-" means that no component is contained.

Examples 16 and 34 are not part of the present invention.

[Table 1]

| | | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 | Example 16 | Example 17 |
|---|---|---|---|---|---|---|---|---|---|---|---|---|---|---|---|---|---|---|
| Polyvalent metal salt | Calcium nitrate tetrahydrate | 16.0 | 16.0 | 16.0 | 16.0 | 16.0 | 16.0 | 16.0 | 16.0 | 16.0 | 16.0 | 16.0 | 16.0 | 16.0 | 16.0 | 16.0 | 16.0 | - |
| | Calcium chloride dihydrate | - | - | - | - | - | - | - | - | - | - | - | - | - | - | - | - | 16.0 |
| | Magnesium sulfate heptahydrate | - | - | - | - | - | - | - | - | - | - | - | - | - | - | - | - | - |
| Cationic compound | UNISENCE KHE 104L | - | - | - | - | - | - | - | - | - | - | - | - | - | - | - | - | - |
| Cationic surfactant | QUARTAMIN-24P | - | - | - | - | - | - | - | - | - | - | - | - | - | - | - | - | - |
| Resin emulsion | Mowinyl 966A | 2.7 | 2.7 | 2.7 | 2.7 | 2.7 | 2.7 | 2.7 | 2.7 | 2.7 | 2.7 | 2.7 | 2.7 | 2.7 | 2.7 | 2.7 | 2.7 | 2.7 |
| Betaine | Carnitine | 12.8 | 22.4 | 32.0 | 5.0 | 10.0 | 20.0 | 40.0 | - | - | - | - | - | - | - | - | - | 5.0 |
| | Trimethyl glycine | - | - | - | - | - | - | - | 5.0 | 10.0 | 20.0 | 40.0 | - | - | - | - | - | - |
| | γ-butyrobetaine | - | - | - | - | - | - | - | - | - | - | - | 5.0 | 10.0 | 20.0 | 40.0 | - | - |
| | AMPHITOL 20BS | - | - | - | - | - | - | - | - | - | - | - | - | - | - | - | 10.0 | - |
| Nonionic surfactant | SURFYNOL 485 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| Water | Ion-exchanged water | Balance | Balance | Balance | Balance | Balance | Balance | Balance | Balance | Balance | Balance | Balance | Balance | Balance | Balance | Balance | Balance | Balance |
| Total | | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 |

[Table 2]

| | | Example 18 | Example 19 | Example 20 | Example 21 | Example 22 | Example 23 | Example 24 | Example 25 | Example 26 | Example 27 | Example 28 | Example 29 | Example 30 | Example 31 | Example 32 | Example 33 | Example 34 |
|---|---|---|---|---|---|---|---|---|---|---|---|---|---|---|---|---|---|---|
| Polyvalent metal salt | Calcium nitrate tetrahydrate | - | - | - | - | - | - | - | - | - | - | - | - | - | - | - | - | - |
| | Calcium chloride dihydrate | 16.0 | 16.0 | 16.0 | 16.0 | 16.0 | 16.0 | 16.0 | 16.0 | 16.0 | 16.0 | 16.0 | 16.0 | - | - | - | - | - |
| | Magnesium sulfate heptahydrate | - | - | - | - | - | - | - | - | - | - | - | - | 16.0 | 16.0 | 16.0 | - | - |
| Cationic compound | UNISENCE KHE 104L | - | - | - | - | - | - | - | - | - | - | - | - | - | - | - | 16.0 | - |
| Cationic surfactant | QUARTAMIN-24P | - | - | - | - | - | - | - | - | - | - | - | - | - | - | - | - | 16.0 |
| Resin emulsion | Mowinyl 966A | 2.7 | 2.7 | 2.7 | 2.7 | 2.7 | 2.7 | 2.7 | 2.7 | 2.7 | 2.7 | 2.7 | 2.7 | 2.7 | 2.7 | 2.7 | 2.7 | 2.7 |
| Betaine | Carnitine | 10.0 | 20.0 | - | - | - | - | - | - | - | - | - | - | 10.0 | - | - | - | - |
| | Trimethyl glycine | - | - | 4.8 | 12.8 | 22.4 | 32.0 | 5.0 | 10.0 | 20.0 | - | - | - | - | 10.0 | - | 10.0 | 10.0 |
| | γ-butyrobetaine | - | - | - | - | - | - | - | - | - | 5.0 | 10.0 | 20.0 | - | - | 10.0 | - | - |
| | AMPHITOL 20BS | - | - | - | - | - | - | - | - | - | - | - | - | - | - | - | - | - |
| Nonionic surfactant | SURFYNOL 485 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| Water | Ion-exchanged water | Balance | Balance | Balance | Balance | Balance | Balance | Balance | Balance | Balance | Balance | Balance | Balance | Balance | Balance | Balance | Balance | Balance |
| Total | | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 |

EP 3 647 485 B1

19

[Table 3]

| | | Example 35 | Example 36 | Example 37 | Example 38 | Example 39 | Example 40 | Example 41 | Example 42 | Example 43 | Example 44 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|---|---|---|---|
| Polyvalent metal salt | Calcium nitrate tetrahydrate | 16.0 | 16.0 | 16.0 | 16.0 | 16.0 | 16.0 | - | - | - | - | 16.0 | - | - | 16.0 | 16.0 | - |
| | Calcium chloride dihydrate | - | - | - | - | - | - | 5.0 | 10.0 | 13.0 | 20.0 | - | 16.0 | - | - | - | - |
| | Magnesium sulfate heptahydrate | - | - | - | - | - | - | - | - | - | - | - | - | - | - | - | - |
| Cationic compound | UNISENCE KHE 104L | - | - | - | - | - | - | - | - | - | - | - | - | 16.0 | - | - | - |
| Cationic surfactant | QUARTAMIN-24P | - | - | - | - | - | - | - | - | - | - | - | - | - | - | - | - |
| Resin emulsion | Mowinyl 966A | 2.7 | 2.7 | - | - | 1.0 | 10.0 | 2.7 | 2.7 | 2.7 | 2.7 | 2.7 | 2.7 | - | 2.7 | - | 2.7 |
| Betaine | Carnitine | - | - | 4.8 | 10.0 | - | - | - | - | - | - | - | - | - | - | - | - |
| | Trimethyl glycine | 10.0 | 10.0 | - | - | 10.0 | 10.0 | 10.0 | 10.0 | 10.0 | 10.0 | - | - | - | - | - | 10.0 |
| | γ-butyrobetaine | - | - | - | - | - | - | - | - | - | - | - | - | - | - | - | - |
| | AMPHITOL 20BS | - | - | - | - | - | - | - | - | - | - | - | - | - | - | - | - |
| Nonionic surfactant | SURFYNOL 485 | 0.5 | - | 0.2 | 0.2 | 0.2 | 0.2 | 0.2 | 0.2 | 0.2 | 0.2 | 0.2 | 0.2 | 0.2 | - | - | 0.2 |
| Water | Ion-exchanged water | Balance | Balance | Balance | Balance | Balance | Balance | Balance | Balance | Balance | Balance | Balance | Balance | Balance | Balance | Balance | Balance |
| Total | | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 |

In the treatment solution of Example 1, a polyvalent metal salt (cationic compound) used was 16.0% by mass of calcium nitrate tetrahydrate and betaine used was 12.8% by mass of carnitine. A resin emulsion used was 2.7% by mass of Mowinyl® 966A (The Nippon Synthetic Chemical Industry Co., Ltd.) of a styrene-acrylic resin. A nonionic surfactant used was 0.2% by mass of SURFYNOL® 485 (a trade name, Air Products and Chemicals, Inc., an HLB value of 17) of an acetylene glycol surfactant.

The treatment solutions of Examples 2 to 7 have a composition obtained by varying the additive amount of carnitine (betaine) from 5.0% by mass to 40.0% by mass in the composition of the treatment solution of Example 1.

The treatment solution of Example 8 has a composition obtained by changing betaine to trimethylglycine (an additive amount of 5.0% by mass) in the composition of the treatment solution of Example 4.

The treatment solutions of Examples 9 to 11 have a composition obtained by varying the additive amount of trimethylglycine (betaine) from 10.0% by mass to 40.0% by mass in the composition of the treatment solution of Example 8.

The treatment solution of Example 12 has a composition obtained by changing betaine to γ-butyrobetaine (an additive amount of 5.0% by mass) in the composition of the treatment solution of Example 4.

The treatment solutions of Examples 13 to 15 have a composition obtained by varying the additive amount of γ-butyrobetaine (betaine) from 10.0% by mass to 40.0% by mass in the composition of the treatment solution of Example 12.

The treatment solution of Example 16 has a composition obtained by changing betaine to AMPHITOL® 20BS (a trade name, Kao Corporation, betaine lauryldimethylaminoacetate) (an additive amount of 10% by mass), which is a commercially available product, in the composition of the treatment solution of Example 5.

The treatment solution of Example 17 has a composition obtained by changing the polyvalent metal salt (cationic compound) to calcium chloride dihydrate (an additive amount of 16.0% by mass) in the composition of the treatment solution of Example 4.

The treatment solutions of Examples 18 and 19 have a composition obtained by varying the additive amount of carnitine (betaine) to 10.0% by mass or 20.0% by mass in the composition of the treatment solution of Example 17.

The treatment solution of Example 20 has a composition obtained by changing betaine to trimethylglycine and by setting the additive amount thereof to 4.8% by mass in the composition of the treatment solution of Example 17.

The treatment solutions of Examples 21 to 26 have a composition obtained by varying the additive amount of trimethylglycine (betaine) from 5.0% by mass to 32.0% by mass in the composition of the treatment solution of Example 20.

The treatment solution of Example 27 has a composition obtained by changing betaine to γ-butyrobetaine (an additive amount of 5.0% by mass) in the composition of the treatment solution of Example 17.

The treatment solutions of Examples 28 and 29 have a composition obtained by varying the additive amount of carnitine (betaine) to 10.0% by mass or 20.0% by mass in the composition of the treatment solution of Example 27.

The treatment solution of Example 30 has a composition obtained by changing the polyvalent metal salt (cationic compound) to magnesium sulfate heptahydrate (an additive amount of 16.0% by mass) in the composition of the treatment solution of Example 18.

The treatment solution of Example 31 has a composition obtained by changing betaine to trimethylglycine (an additive amount of 10.0% by mass) in the composition of the treatment solution of Example 30.

The treatment solution of Example 32 has a composition obtained by changing betaine to γ-butyrobetaine (an additive amount of 10.0% by mass) in the composition of the treatment solution of Example 30.

The treatment solution of Example 33 has a composition obtained by changing the cationic compound to UNISENCE KHE 104L (a trade name, SENKA Corporation, a dimethylamine-epichlorohydrin condensate) (an additive amount of 16.0% by mass), which is a commercially available product of a cationic resin, in the composition of the treatment solution of Example 25.

The treatment solution of Example 34 has a composition obtained by changing the cationic compound to QUARTAMIN®-24P (a trade name, Kao Corporation, lauryltrimethylammonium chloride) (an additive amount of 16.0% by mass), which is a commercially available product of a cationic surfactant, in the composition of the treatment solution of Example 25.

The treatment solution of Example 35 has a composition obtained by increasing the additive amount of SURFYNOL 485 (nonionic surfactant) to 0.5% by mass in the composition of the treatment solution of Example 9.

The treatment solution of Example 36 has a composition obtained by adding no SURFYNOL 485 (nonionic surfactant) in the composition of the treatment solution of Example 9.

The treatment solution of Example 37 has a composition obtained by adding no Mowinyl 966A (resin emulsion) and by setting the additive amount of carnitine (betaine) to 4.8% by mass in the composition of the treatment solution of Example 1.

The treatment solution of Example 38 has a composition obtained by setting the additive amount of carnitine (betaine) to 10.0% by mass in the composition of the treatment solution of Example 37.

The treatment solution of Example 39 has a composition obtained by reducing the additive amount of Mowinyl 966A (resin emulsion) to 1.0% by mass in the composition of the treatment solution of Example 35.

The treatment solution of Example 40 has a composition obtained by increasing the additive amount of Mowinyl 966A (resin emulsion) to 10.0% by mass in the composition of the treatment solution of Example 35.

The treatment solution of Example 41 has a composition obtained by changing the polyvalent metal salt (cationic compound) to calcium chloride dihydrate and by reducing the additive amount thereof to 5.0% by mass in the composition of the treatment solution of Example 9.

The treatment solutions of Examples 42 to 44 have a composition obtained by varying the additive amount of calcium chloride dihydrate from 10.0% by mass to 20.0% by mass in the composition of the treatment solution of Example 41.

The treatment solution of Comparative Example 1 has a composition obtained by adding no betaine in the composition of the treatment solution of Example 1.

The treatment solution of Comparative Example 2 has a composition obtained by changing the polyvalent metal salt to calcium chloride dihydrate (an additive amount of 16% by mass) in the composition of the treatment solution of Example 1.

The treatment solution of Comparative Example 3 has a composition obtained by changing the cationic compound to UNISENCE KHE 104L (an additive amount of 16.0% by mass), which is a cationic resin, and by adding no resin emulsion in the composition of the treatment solution of Comparative Example 1.

The treatment solution of Comparative Example 4 has a composition obtained by adding no SURFYNOL 485 (nonionic surfactant) in the composition of the treatment solution of Comparative Example 1.

The treatment solution of Comparative Example 5 has a composition obtained by adding Mowinyl 966A (resin emulsion) in the composition of the treatment solution of Comparative Example 4.

The treatment solution of Comparative Example 6 has a composition obtained by adding no cationic compound (calcium chloride dihydrate) in the composition of the treatment solution of Comparative Example 9.

The treatment solutions of the examples and the comparative examples were prepared in accordance with the compositions shown in Tables 1 to 3. In particular, components were put into a container, were mixed for two hours using a magnetic stirrer, and were agitated. Thereafter, filtration was performed using a membrane filter, made of PTFE, having a pore size of 5 μm, whereby the treatment solutions (hereinafter also referred to as "each treatment solution") of the examples and the comparative examples were obtained.

(Preparation of Pigment textile printing ink)

The composition of a white pigment textile printing ink W1 used to evaluate the treatment solutions is shown in Table 4. Values in the table are in mass percent. Ion-exchanged water was adjusted and added such that the total mass of the pigment textile printing ink W1 was 100% by mass.

[Table 4]

| Components | W1 |
| --- | --- |
| Titanium dioxide slurry | 45.0 |
| Takelac W-6021 | 30.0 |
| 2-Pyrrolidone | 2.0 |
| Glycerin | 10.0 |
| Triethylene glycol | 1.0 |
| Butyl triglycol | 1.0 |
| BYK-348 | 0.3 |
| Ion-exchanged water | Balance |
| Total | 100.0 |

In the pigment textile printing ink W1, a white pigment used was titanium dioxide (C.I. Pigment White 6) and titanium dioxide slurry, NanoTek(R) Sulurry (a treatment marks, C.I. Kasei Co., Ltd., a titanium dioxide solid matter content of 20% by mass, an average particle size of 250 nm), was added. In Table 4, the content of the titanium dioxide slurry is described. The content of solid matter of titanium dioxide in the pigment textile printing ink W1 is 9% by mass.

Resin used was a urethanic resin emulsion, Takelac® W-6021 (a trade name, Mitsui Chemical Polyurethane Inc., a solid matter content of 30% by mass). In Table 4, the content of the resin emulsion, which contains a dispersion medium (water), is described. The content of resin in the pigment textile printing ink W1 is 9% by mass. A silicone surfactant (nonionic surfactant) used was BYK-348 (a trade name, BYK Chemie). Other components described under the names of compounds were commercially available products used as reagents.

Components were put into a container in accordance with the composition of the pigment textile printing ink W1 shown in Table 4, were mixed for two hours using a magnetic stirrer, and were agitated. Next, a dispersion treatment was performed for one hour using a bead mill filled with zirconia beads with a diameter of 0.3 mm. Thereafter, filtration was performed using a membrane filter, made of PTFE, having a pore size of 5 μm, whereby the pigment textile printing ink W1 was obtained.

(Preparation of Fabrics for Evaluation)

[Fabrics]

Colored cotton fabrics for evaluation were six types below. T-shirt A, T-shirt B, and T-shirt C were so-called dark color T-shirts colored to a dark color. T-shirt D, T-shirt E, and T-shirt F were so-called light color T-shirts colored to a light color. In every T-shirt, a triazine compound used for textile dyeing was present in fabric.

T-shirt A (black): TOMS heavyweight T-shirt 00085-CVT 005 Black (Printstar Ltd., cotton 100%)
T-shirt B (red): TOMS heavyweight T-shirt 00085-CVT 010 Red (Printstar Ltd., cotton 100%)
T-shirt C (blue): TOMS heavyweight T-shirt 00085-CVT 032 Royal Blue (Printstar Ltd., cotton 100%)
T-shirt D (ash): TOMS heavyweight T-shirt 00085-CVT 044 Ash (Printstar Ltd., cotton 100%)
T-shirt E (natural): TOMS heavyweight T-shirt 00085-CVT 106 Natural (Printstar Ltd., cotton 100%)
T-shirt F (pink): TOMS heavyweight T-shirt 00085-CVT 011 Pink (Printstar Ltd., cotton 100%)

[Application of Treatment Solutions]

The treatment solutions of the examples and the comparative examples were applied. An application method used was roller coating and a sponge roller was sufficiently impregnated with each treatment solution. Next, the sponge roller was rolled over the front surface of a breast region (a single surface) of T-shirt A in each of horizontal directions and vertical directions substantially perpendicular thereto three or four times, whereby the treatment solution was applied such that the coating weight thereof was as uniform as possible. This operation was performed on T-shirts B, C, D, E, and F.

The coating weight of the treatment solution applied to each T-shirt was about 20 g per A4 size area. The T-shirt provided with the treatment solution was heated and dried at 170 °C for 45 seconds using a heat press (manufactured by Asahi Garment Machinery Co., Ltd., AF-54 TEN, a lower iron size of 500 mm × 400 mm). In this operation, the pressing force of the heat press was set to 4.5 kN.

[Textile Printing]

Next, a region of the T-shirt provided with the treatment solution was printed with the pigment textile printing ink W1 by an ink jet method using an ink jet printer, SC-F200 (a trade name, Seiko Epson Corporation). In this operation, textile printing conditions of the ink jet printer were set to 1,440 × 1,440 dpi (dots per inch) and the coating weight of the pigment textile printing ink W1 was set to 200 mg/inch$^2$. Thereafter, the T-shirt was heated and dried at 170 °C for 45 seconds (a pressing force of 4.5 kN) using the heat press (manufactured by Asahi Garment Machinery Co., Ltd., AF-54 TEN, a lower iron size of 500 mm × 400 mm).

(Evaluation)

T-shirts A to F to which each treatment solution was applied and which was then printed were evaluated as described below. The results were shown in Tables 5, 6, and 7.

[Pretreatment Marks]

As an indicator for pretreatment marks, ΔE was evaluated. In particular, for each T-shirt, the hue (L*α, a*α, b*α) of a region α to which no treatment solution was applied and the hue (L*β, a*β, b*β) of a region β to which the treatment solution was applied and which was not printed with the pigment textile printing ink W1 were measured using a colorimeter, Spectrolino (Gretag AG), and ΔE (delta E) was calculated and was evaluated in accordance with standards below. Incidentally, Equation (1) below was used to calculate ΔE. When evaluation results of pretreatment marks have a rating of c or above, it can be said that an effect of the present invention is obtained.

**EP 3 647 485 B1**

$$\Delta E = ((L*\alpha - L*\beta)^2 + (a*\alpha - a*\beta)^2 + (b*\alpha - b*\beta)^2)^{1/2}$$

(1)

s: $\Delta E \leq 1$.
a: $1 < \Delta E \leq 2$.
b: $2 < \Delta E \leq 3$.
c: $3 < \Delta E \leq 4$.
d: $4 < \Delta E$.

[Chromogenic Properties]

For a region $\gamma$ of each T-shirt that was printed with the pigment textile printing ink W1, color was measured as an indicator for chromogenic properties (whiteness) of the white pigment. In particular, $L*$ was measured using the colorimeter, Spectrolino (Gretag AG), and was evaluated in accordance with standards below. Incidentally, the average of three levels, that is, T-shirts A, B, and C, was used as $L*$ of a dark color T-shirt and the average of three levels, that is, T-shirts D, E, and F, was used as $L*$ of a light color T-shirt. When evaluation results of chromogenic properties are level c or above, it can be said that an effect of the present invention is obtained.

a: $L*$ is 85 or more.
b: $L*$ is 80 to less than 85.
c: $L*$ is 75 to less than 80.
d: $L*$ is less than 75.

[Strike-through]

Each T-shirt was turned inside out and a state in which the white pigment bled out on the back side of the region $\gamma$, that is, the degree of occurrence of strike-through was visually observed and was evaluated in accordance with standards below.

a: The bleeding (strike-through) of the white pigment is not observed.
b: The bleeding (strike-through) of the white pigment is hardly observed (the bleeding area is 3% or less of the region $\gamma$).
c: The bleeding (strike-through) of the white pigment is slightly observed (the bleeding area is more than 3% to 5% or less of the region $\gamma$).
d: The bleeding (strike-through) of the white pigment is significantly observed (the bleeding area is more than 5% of the region $\gamma$).

24

[Table 5]

| | | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 | Example 16 | Example 17 |
|---|---|---|---|---|---|---|---|---|---|---|---|---|---|---|---|---|---|---|
| Pretreatment marks on dark-color T-shirts | T-shirt A: black | b | a | a | c | b | a | b | c | b | a | b | c | b | a | b | b | c |
| | T-shirt B: red | a | b | b | c | a | b | c | c | s | a | c | c | a | b | c | c | c |
| | T-shirt C: blue | b | a | a | c | b | a | b | c | b | a | b | c | b | a | b | b | c |
| Chromogenic properties of dark-color T-shirt | | a | b | b | a | a | a | c | a | a | a | c | a | a | a | c | c | a |
| Strike-through in dark-color T-shirt | | a | b | c | a | a | a | d | a | a | a | d | a | a | a | d | d | a |
| Pretreatment marks on light-color T-shirts | T-shirt D: ash | c | b | b | c | c | b | b | c | c | b | b | c | c | b | b | b | c |
| | T-shirt E: natural | a | c | c | c | a | c | c | c | a | c | c | c | a | c | c | c | c |
| | T-shirt F: pink | c | b | b | c | c | b | b | c | c | b | b | c | c | b | b | b | c |
| Chromogenic properties of light-color T-shirt | | a | b | b | a | a | a | c | a | a | a | c | a | a | a | c | c | a |
| Strike-through in light-color T-shirt | | a | b | c | a | a | a | d | a | a | a | d | a | a | a | d | d | a |

EP 3 647 485 B1

[Table 6]

| | | Example 18 | Example 19 | Example 20 | Example 21 | Example 22 | Example 23 | Example 24 | Example 25 | Example 26 | Example 27 | Example 28 | Example 29 | Example 30 | Example 31 | Example 32 | Example 33 | Example 34 |
|---|---|---|---|---|---|---|---|---|---|---|---|---|---|---|---|---|---|---|
| Pretreatment marks on dark-color T-shirts | T-shirt A: black | b | a | c | b | a | a | c | b | a | c | b | a | a | a | a | c | c |
| | T-shirt B: red | a | b | c | a | b | b | c | s | a | c | a | b | a | a | a | c | c |
| | T-shirt C: blue | b | a | c | b | a | a | c | b | a | c | b | a | b | b | b | c | c |
| Chromogenic properties of dark-color T-shirt | | a | a | a | a | b | b | a | a | a | a | a | a | c | c | c | c | c |
| Strike-through in dark-color T-shirt | | a | a | a | a | b | c | a | a | a | a | a | a | c | c | c | c | c |
| Pretreatment marks on light-color T-shirts | T-shirt D: ash | c | b | c | c | b | b | c | c | b | c | c | b | b | b | b | c | c |
| | T-shirt E: natural | a | c | c | a | c | c | c | a | c | c | a | c | b | b | b | c | c |
| | T-shirt F: pink | c | b | c | c | b | b | c | c | b | c | c | b | b | b | b | c | c |
| Chromogenic properties of light-color T-shirt | | a | a | a | a | b | b | a | a | a | a | a | a | c | c | c | c | c |
| Strike-through in light-color T-shirt | | a | a | a | a | b | c | a | a | a | a | a | a | c | c | c | c | c |

EP 3 647 485 B1

[Table 7]

| | | Example 35 | Example 36 | Example 37 | Example 38 | Example 39 | Example 40 | Example 41 | Example 42 | Example 43 | Example 44 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|---|---|---|---|
| Pretreatment marks on dark-color T-shirts | T-shirt A: black | b | c | c | b | c | c | b | b | b | c | d | d | d | d | c | b |
| | T-shirt B: red | a | a | c | a | c | c | s | s | s | c | d | d | d | d | d | b |
| | T-shirt C: blue | b | b | c | b | c | c | b | b | b | c | c | c | d | d | c | b |
| Chromogenic properties of dark-color T-shirt | | b | a | b | b | b | a | b | a | a | a | a | a | d | a | d | d |
| Strike-through in dark-color T-shirt | | b | a | b | b | b | a | b | a | a | a | a | a | d | a | d | d |
| Pretreatment marks on light-color T-shirts | T-shirt D: ash | b | c | c | c | c | c | c | c | c | c | c | c | c | d | b | b |
| | T-shirt E: natural | a | a | c | b | c | c | a | a | a | c | c | c | c | d | c | b |
| | T-shirt F: pink | b | c | c | c | c | c | c | c | c | c | c | c | c | d | b | b |
| Chromogenic properties of light-color T-shirt | | b | a | b | b | b | a | b | a | a | a | a | a | d | a | c | d |
| Strike-through in light-color T-shirt | | b | a | b | b | b | a | b | a | a | a | a | a | d | a | d | d |

27

**EP 3 647 485 B1**

As shown in Tables 5 to 7, in all of dark color T-shirts and light color T-shirts, evaluation results of pretreatment marks in the examples had a rating of c corresponding to the level "fair" or a higher rating and did not have a rating of d corresponding to the level "poor". In particular, in Examples 9, 25, 41, 42, and 43, in which the cationic compound was calcium chloride dihydrate, the content thereof was 5.0% by mass to 16.0% by mass, betaine was trimethylglycine, and the content thereof was 10.0% by mass in T-shirts B (red), a rating of s corresponding to the level "particularly excellent" was obtained. These showed that the occurrence of pretreatment marks was reduced.

Evaluation results of chromogenic properties in the examples had a rating of c corresponding to the level "fair" or a higher rating in all the examples. This showed that chromogenic properties were enhanced. In the examples other than the examples in which betaine used was one of carnitine, trimethylglycine, and γ-butyrobetaine and the additive amount was 40.0% by mass and the example in which betaine used was AMPHITOL 20BS, evaluation results of strike-through had a rating of c corresponding to the level "fair" or a higher rating. This showed that strike-through was enhanced depending on the content and type of betaine.

However, evaluation results of pretreatment marks in Comparative Examples 1 to 5 had a rating of d corresponding to the level "poor". It became clear that these comparative examples were inferior to the examples. This is due to the fact that no betaine is contained.

Evaluation results of chromogenic properties in the comparative examples had a rating of d corresponding to the level "poor" in Examples 3 and 5, in which no resin emulsion was added, and Comparative Example 6, in which no cationic compound was contained. It became clear that ensuring the chromogenic properties was difficult. In Comparative Examples 3, 5, and 6, evaluation results of strike-through had a rating of d corresponding to the level "poor" in all of dark color T-shirts and light color T-shirts. It became clear that these comparative examples were inferior to the examples.

Reference Signs List

1 Printer,
2 Fabric,
3 Ink jet head,
4 Carriage,
5 Main scanning mechanism,
6 Platen roller,
7a, 7b, 7c, 7d, 7e, 7f Ink cartridges,
8 Timing belt,
9 Motor,
10 Guide shaft

**Claims**

1. A treatment solution composition for application to fabric and textile printing, containing:

   a cationic compound;
   betaine; and
   water;
   wherein the ratio of the content of the betaine to the content of the cationic compound is 0.2 or more on a mass basis;
   the betaine is one or more selected from carnitine, trimethylglycine, and γ-butyrobetaine; and
   the cationic compound is a polyvalent metal salt containing a divalent or higher polyvalent metal cation.

2. The treatment solution composition according to Claim 1, for use in ink jet pigment textile printing.

3. The treatment solution composition according to any one of Claims 1 to 2, wherein the ratio of the content of the betaine to the content of the cationic compound is 0.6 or more on a mass basis.

4. The treatment solution composition according to any one of Claims 1 to 3, wherein the ratio of the content of the betaine to the content of the cationic compound is 2.0 or less on a mass basis.

5. The treatment solution composition according to Claim 1, wherein the cationic compound is a calcium salt.

**6.** The treatment solution composition according to any one of Claims 1 to 5, further containing a surfactant, wherein the HLB value of the surfactant is 13 or more.

**7.** The treatment solution composition according to Claim 6, wherein the content of the surfactant is 0.3% by mass or less with respect to the total mass of the treatment solution.

**8.** An ink jet textile printing method comprising a step of applying the treatment solution composition according to any one of Claims 1 to 7 to fabric.

**9.** The ink jet textile printing method according to Claim 8, comprising a step of applying a pigment textile printing ink to a region of the fabric that is provided with the treatment solution by an ink jet method.

**10.** Fabric obtained by applying the treatment solution composition according to any one of Claims 1 to 7.

**Patentansprüche**

**1.** Behandlungslösungszusammensetzung zum Auftragen auf Gewebe und Textdruck, enthaltend:

> eine kationische Verbindung;
> Betain; und
> Wasser;
> wobei das Verhältnis des Gehalts des Betains zu dem Gehalt der kationischen Verbindung 0,2 oder mehr auf einer Massenbasis ist;
> das Betain eines oder mehrere, ausgewählt aus Carnitin, Trimethylglycin und $\gamma$-Butyrobetain ist; und
> die kationische Verbindung ein mehrwertiges Metallsalz ist, das ein zweiwertiges oder höherwertiges polyvalentes Metallkation enthält.

**2.** Behandlungslösungszusammensetzung nach Anspruch 1 zur Verwendung in Tintenstrahl-Pigmenttextildruck.

**3.** Behandlungslösungszusammensetzung nach einem der Ansprüche 1 bis 2, wobei das Verhältnis des Gehalts des Betains zu dem Gehalt der kationischen Verbindung 0,6 oder mehr auf einer Massenbasis ist.

**4.** Behandlungslösungszusammensetzung nach einem der Ansprüche 1 bis 3, wobei das Verhältnis des Gehalts des Betains zu dem Gehalt der kationischen Verbindung 2,0 oder weniger auf einer Massenbasis ist;

**5.** Behandlungslösungszusammensetzung nach Anspruch 1, wobei die kationische Verbindung ein Kalziumsalz ist.

**6.** Behandlungslösungszusammensetzung nach einem der Ansprüche 1 bis 5, ferner enthaltend ein Tensid, wobei der HLB-Wert des Tensids 13 oder mehr ist.

**7.** Behandlungslösungszusammensetzung nach Anspruch 6, wobei der Gehalt des Tensids 0,3 Masseprozent oder weniger in Bezug auf die Gesamtmasse der Bearbeitungslösung ist.

**8.** Tintenstrahl-Textildruckverfahren, umfassend einen Schritt zum Auftragen der Behandlungslösungszusammensetzung nach einem der Ansprüche 1 bis 7 auf Gewebe.

**9.** Tintenstrahl-Textildruckverfahren nach Anspruch 8, umfassend einen Schritt zum Auftragen einer Pigmenttextildrucktinte auf einen Bereich des Gewebes, der mit der Bearbeitungslösung bereitgestellt ist, durch ein Tintenstrahlverfahren.

**10.** Gewebe, das durch Auftragen der Behandlungslösungszusammensetzung nach einem der Ansprüche 1 bis 7 erhalten wird.

**Revendications**

**1.** Composition de solution de traitement destinée à l'application sur un tissu et à l'impression textile, contenant :

un composé cationique ;

de la bétaïne ; et

de l'eau ;

dans laquelle le rapport de la teneur en bétaïne à la teneur en composé cationique est de 0,2 ou plus sur une base massique ;

la bétaïne est l'un ou plusieurs sélectionné(s) parmi la carnitine, la triméthylglycine, et la y-butyrobétaïne ; et

le composé cationique est un sel métallique polyvalent contenant un cation métallique polyvalent divalent ou de polyvalence plus élevée.

2. Composition de solution de traitement selon la revendication 1, destinée à être utilisée dans l'impression textile pigmentaire à jet d'encre.

3. Composition de solution de traitement selon l'une quelconque des revendications 1 à 2, dans laquelle le rapport de la teneur en bétaïne à la teneur en composé cationique est de 0,6 ou plus sur une base massique.

4. Composition de solution de traitement selon l'une quelconque des revendications 1 à 3, dans laquelle le rapport de la teneur en bétaïne à la teneur en composé cationique est de 2,0 ou moins sur une base massique.

5. Composition de solution de traitement selon la revendication 1, dans laquelle le composé cationique est un sel de calcium.

6. Composition de solution de traitement selon l'une quelconque des revendications 1 à 5, contenant en outre un agent tensioactif, dans laquelle la valeur HLB de l'agent tensioactif est de 13 ou plus.

7. Composition de solution de traitement selon la revendication 6, dans laquelle la teneur en agent tensioactif est de 0,3 % en masse ou moins par rapport à la masse totale de la solution de traitement.

8. Procédé d'impression textile à jet d'encre comprenant une étape d'application de la composition de solution de traitement selon l'une quelconque des revendications 1 à 7 sur un tissu.

9. Procédé d'impression textile à jet d'encre selon la revendication 8, comprenant un étape d'application d'une encre d'impression textile pigmentaire sur une région du tissu pourvue de la solution de traitement à l'aide d'un procédé à jet d'encre.

10. Tissu obtenu par application de la composition de solution de traitement selon l'une quelconque des revendications 1 à 7.

FIG. 1

EP 3 647 485 B1

**EP 3 647 485 B1**